# EUROPEAN PATENT SPECIFICATION

(11) **EP 4 329 372 B1**
(45) Date of publication and mention of the grant of the patent: **25.02.2026**
(21) Application number: 22790892.8
(22) Date of filing: 12.04.2022
(51) Int. Cl.: H04W 36/38, H04L 1/1607, H04W 36/00, H04W 88/04, H04L 1/00

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(30) Priority: 23.04.2021 CN 202110442137; 08.05.2021 CN 202110502445; 05.08.2021 CN 202110897785
(43) Date of publication of application: 28.02.2024
(73) Proprietor: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN)
(74) Representative: Pfenning, Meinig & Partner mbB
(86) International application number: PCT/CN2022/086281
(87) International publication number: WO 2022/222783

(56) References cited:
- WO-A1-2018/201498
- WO-A1-2019/028893
- CN-A- 110 035 453
- US-A1- 2020 288 511
- US-A1- 2020 305 218
- ERICSSON: "Service continuity procedure and scenarios for sidelink relay", vol. RAN WG2, no. Electronic meeting; 20201102 - 20201113, 22 October 2020 (2020-10-22), XP052362770, Retrieved from the Internet <URL:https://ftp.3gpp.org/tsg_ran/WG2_RL2/TSGR2_112-e/Docs/R2-2009721.zip R2-2009721- Service continuity procedure and scenarios for sidelink relay.docx> [retrieved on 20201022]
- SAMSUNG, ERICSSON: "(TP for LTE_feMob BL CR for TS 36.300) Clarification of supporting PDCP SN continuity for RLC-UM bearer in DAPS HO", 3GPP DRAFT; R3-203547, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. E-meeting; 20200601 - 20200611, 22 May 2020 (2020-05-22), Mobile Competence Centre ; 650, route des Lucioles ; F-06921 Sophia-Antipolis Cedex ; France , XP051889295

## Description

### TECHNICAL FIELD

This application relates to the field of communication technologies, and in particular, to a data transmission method and an apparatus.

### BACKGROUND

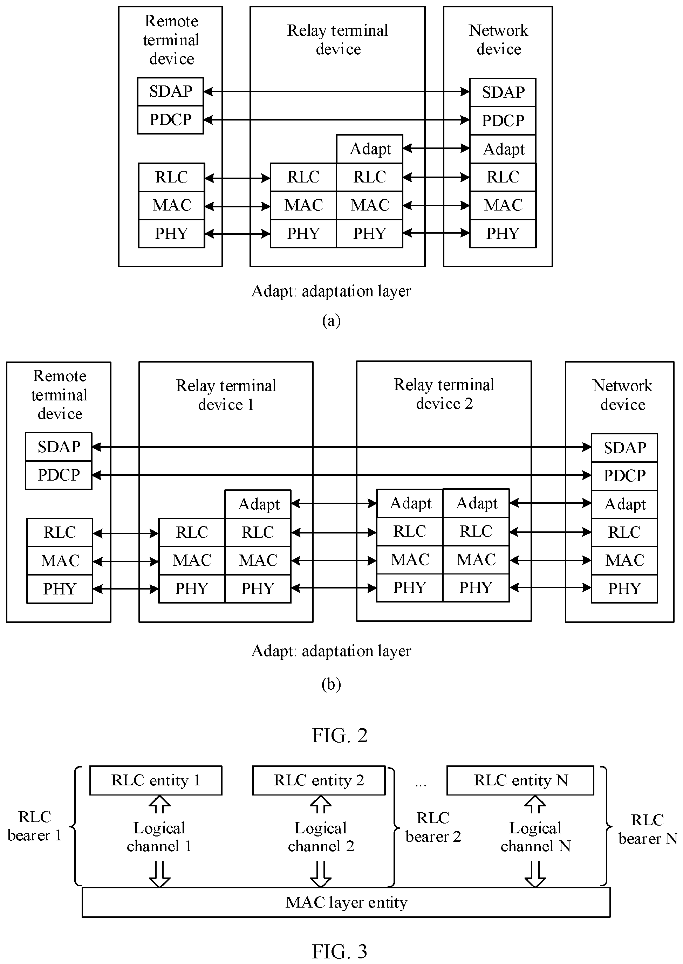

Currently, a remote terminal device may communicate with a network device through different paths. For example, the remote terminal device may communicate with the network device via a relay terminal device, or may directly communicate with the network device. When link quality of a path through which the remote terminal device communicates with the network device is poor, the remote terminal device may switch to another path to communicate with the network device. If the remote terminal device switches from a path that includes a relay terminal device to another path, a large quantity of data packets are lost.
ERICSSON: "Service continuity procedure and scenarios for sidelink relay", 3GPP DRAFT; R2-2009721, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE vol. RAN WG2, no. Electronic meeting; 20201102 - 20201113 22 October 2020 (2020-10-22), XP052362770, Retrieved from the Internet: URL:https://ftp.3gpp.org/tsg_ran/WG2_RL2/TSGR2_112-e/Docs/R2-2009721.zip R2-2009721-Service continuity procedure and scenarios for sidelink relay.docx [retrieved on 2020-10-22] * pages 2-4; figures 2,3 discloses that an remote UE and relay UE change the gNB.

US2020288511A1 discloses sidelink handover from relayed to a direct connection, initiated by UE.

### SUMMARY

This application provides a data transmission method and an apparatus, to resolve a problem that a large quantity of data packets are lost when a remote terminal device switches from a path that includes a relay terminal device to another path.

A data transmission method is provided, applied to a first network device, according to claim 1.

A data transmission method is provided, applied to a remote terminal device, according to claim 8.

A computer-readable storage medium is provided, including instructions, according to claim 15.

An apparatus is provided according to claim 14.

### BRIEF DESCRIPTION OF DRAWINGS

FIG. 1 is a schematic diagram of a communication scenario according to a not claimed example to understand the present application;
FIG. 2 is a schematic diagram of a protocol stack according to a not claimed example to understand the present application;
FIG. 3 is a schematic diagram of an RLC bearer according to a not claimed example to understand the present application;
FIG. 4(a) to FIG. 4(e) are a schematic diagram of another RLC bearer according to a not claimed example to understand the present application;
FIG. 5 is a schematic diagram of a scenario in which a terminal device performs path switch according to an embodiment of this application; Specifically, figures 5(c) and 5(d) disclose the topology of the invention of the application.
FIG. 6 is a schematic diagram of a scenario in which a terminal device performs switch according to an embodiment of this application;
FIG. 7 is a schematic diagram of receiving/sending a data packet by a receive/transmit end according to an embodiment of this application;
FIG. 8 is another schematic diagram of receiving/sending a data packet by a receive/transmit end according to an embodiment of this application;
FIG. 9 is an interaction flowchart of a data transmission method according to an embodiment of this application;
FIG. 10 is a schematic diagram of sending and receiving a data packet by each device in a terminal device relay scenario according to an embodiment of this application;
FIG. 11 is another schematic diagram of sending and receiving a data packet by each device in a terminal device relay scenario according to an embodiment of this application;
FIG. 12 is an interaction flowchart of another data transmission method according to a not claimed example to understand the present application;
FIG. 13A is an interaction flowchart of still another data transmission method according to a not claimed example to understand the present application;
FIG. 13B is an interaction flowchart of still another data transmission method according to an embodiment of this application;
FIG. 14 is a schematic diagram of another protocol stack according to a not claimed example to understand the present application;
FIG. 15 is an interaction flowchart of still another data transmission method according to an embodiment of this application;
FIG. 16 is an interaction flowchart of still another data transmission method according to an embodiment of this application;
FIG. 17A and FIG. 17B are an interaction flowchart of still another data transmission method according to an embodiment of this application;
FIG. 18A and FIG. 18B are an interaction flowchart of still another data transmission method according to an embodiment of this application;
FIG. 19A and FIG. 19B are an interaction flowchart of still another data transmission method according to an embodiment of this application;
FIG. 20A and FIG. 20B are an interaction flowchart of still another data transmission method according to an embodiment of this application;
FIG. 21 is a schematic composition diagram of a data transmission apparatus according to an embodiment of this application;
FIG. 22 is a schematic diagram of a hardware structure of a data transmission apparatus according to an embodiment of this application; and
FIG. 23 is a schematic diagram of a hardware structure of another data transmission apparatus according to an embodiment of this application.

### DESCRIPTION OF EMBODIMENTS

In the description of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, terms such as "an example" or "for example" are used to indicate an example, an illustration, or a description. Any embodiment or design scheme described as an "example" or "for example" in this application should not be explained as being more preferred or having more advantages than another embodiment or design scheme. Exactly, use of the word "example" or "for example" is intended to present a relative concept in a specific manner.

A method provided in embodiments of this application is applicable to but is not limited to the following fields: device-to-device (device-to-device, D2D), vehicle-to-everything (vehicle-to-everything, V2X), unmanned driving (unmanned driving), automated driving (automated driving, ADS), driver assistance (driver assistance, ADAS), intelligent driving (intelligent driving), connected driving (connected driving), intelligent network driving (intelligent network driving), car sharing (car sharing), and the like.

The method provided in embodiments of this application is applicable to but is not limited to the following communication systems: a long term evolution (long term evolution, LTE) system, a 5th generation (5th generation, 5G) system, a new radio (new radio, NR) system, a wireless local area network (wireless local area network, WLAN) system, a future evolved system, or a plurality of converged communication systems. The 5G system may be a non-standalone (non-standalone, NSA) 5G system or a standalone (standalone, SA) 5G system.

A network device in embodiments of this application is an entity on a network side that is configured to: send a signal, receive a signal, or send a signal and receive a signal. The network device may be an apparatus deployed in a radio access network (radio access network, RAN) to provide a wireless communication function for a terminal device, for example, may be a transmission reception point (transmission reception point, TRP), a base station, or a control node in various forms (for example, a network controller or a wireless controller (for example, a wireless controller in a cloud radio access network (cloud radio access network, CRAN) scenario)). Specifically, the network device may be a macro base station, a micro base station (also referred to as a small cell), a relay station, an access point (access point, AP), or the like in various forms, or may be an antenna panel of a base station. The control node may be connected to a plurality of base stations, and configure resources for a plurality of terminal devices that fall within coverage of the plurality of base stations. In systems that use different radio access technologies, names of devices having a function of the base station may vary. For example, the device having the function of the base station may be referred to as an evolved NodeB (evolved NodeB, eNB or eNodeB) in the LTE system, or may be referred to as a next generation node base station (next generation node base station, gNB) in the 5G system or the NR system. A specific name of the base station is not limited in this application. The network device may alternatively be a network device in a future evolved public land mobile network (public land mobile network, PLMN) or the like.

A terminal device in embodiments of this application is an entity on a user side that is configured to: receive a signal, send a signal, or receive a signal and send a signal. The terminal device is configured to provide one or more of a voice service and a data connectivity service for a user. The terminal device may also be referred to as user equipment (user equipment, UE), a terminal, an access terminal, a subscriber unit, a subscriber station, a mobile station, a remote station, a mobile device, a user terminal, a wireless communication device, a user agent, or a user apparatus. The terminal device may be a V2X device, for example, an intelligent vehicle (smart car or intelligent car), a digital vehicle (digital car), an unmanned vehicle (unmanned car, driverless car, pilotless car, or automobile), a self-driving vehicle (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a D2D device, for example, an electricity meter or a water meter. Alternatively, the terminal device may be a mobile station (mobile station, MS), a subscriber unit (subscriber unit), an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal device, a handheld device having a wireless communication function, a computing device or another processing device connected to a wireless modem, a vehicle-mounted device, or a wearable device (which may also be referred to as a wearable intelligent device). Alternatively, the terminal device may be a terminal device in a next generation communication system, for example, a terminal device in a future evolved PLMN.

Currently, a terminal device (which is assumed as a terminal device 1) may communicate with a network device via another terminal device (there may be one or more terminal devices), and further communicate with a core network (corenet, CN). In this case, the terminal device 1 may be referred to as a remote terminal device (remote UE), the another terminal device may be referred to as a relay terminal device (relay UE), and this communication scenario may be referred to as a terminal device relay (UE relay) scenario. For example, the remote terminal device may be a D2D device (for example, a watch), and the relay terminal device may be a V2X device, a mobile phone, a tablet computer, or the like.

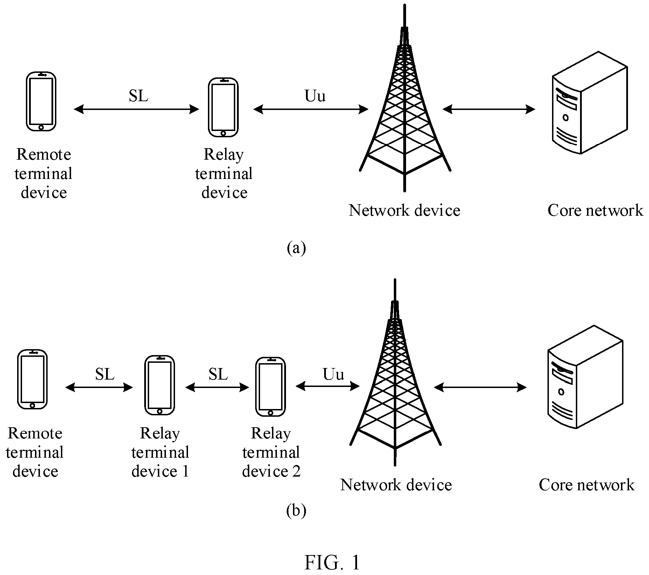

The remote terminal device and the relay terminal device, and the relay terminal devices may communicate with each other through a sidelink (sidelink, SL) (or a PC5 link), and the relay terminal device and the network device may communicate with each other through a radio link (or a Uu link) of an air interface. For example, as shown in (a) in FIG. 1, a remote terminal device may communicate with a network device via one relay terminal device, and then communicate with a core network. For example, as shown in (b) in FIG. 1, a remote terminal device may alternatively communicate with a network device via a plurality of relay terminal devices (in FIG. 2, two relay terminal devices are used as an example for drawing), and then communicate with a core network. A scenario in which the remote terminal device communicates with the network device via a plurality of relay terminal devices may be referred to as a multi-hop relay scenario.

There is a scenario is a layer 2 (layer 2, L2) relay (L2 relay) scenario in the UE relay scenario. In this scenario, the remote terminal device is visible to the network device. In this scenario, when the L2 relay scenario includes one relay terminal device, for an example of a protocol stack of the remote terminal device, the relay terminal device, and the network device, refer to (a) in FIG. 2. When the L2 relay scenario includes a plurality of relay terminal devices, for an example of a protocol stack of the remote terminal device, the relay terminal device, and the network device, refer to (b) in FIG. 2. In (b) in FIG. 2, an example in which the L2 relay scenario includes two relay terminal devices is used for drawing. If there is another relay terminal device between a relay terminal device 2 and a network device, protocol stacks of these relay terminal devices are the same as those of the relay terminal device 2. Understanding may be made by reference. Details are not described again. Protocol layers in (a) in FIG. 2 and (b) in FIG. 2 are a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, and a physical (physical, PHY) layer. An adapt layer refers to an adaptation layer (adaption layer). It should be noted that (a) in FIG. 2 and (b) in FIG. 2 are merely examples of protocol stacks. During actual implementation, protocol layers in a protocol stack of each device may be more or less than those in the figure, or may be different from the protocol layers in the figure. This is not limited in this application.

One protocol layer includes one or more protocol layer entities of the protocol layer. For example, an RLC layer may include one or more RLC entities. A PDCP layer may include one or more PDCP entities. A function of a protocol layer may be implemented by a protocol layer entity of the protocol layer.

To better understand the following, some content and concepts related to this application are first described herein together.

### 1. Working mode of an RLC layer

The working mode of the RLC layer includes an acknowledged mode (acknowledged mode, AM) and an unacknowledged mode (unacknowledged mode, UM). In the AM mode, the RLC layer supports a data retransmission mechanism. When a data packet is lost, the data packet can be retransmitted. In the UM mode, the RLC layer does not support a data retransmission mechanism. A data packet cannot be retransmitted.

### 2. Dual active protocol stack (dual active protocol stack, DAPS) handover

The DAPS handover is a handover process in which a terminal device keeps a connection to a source network device after receiving a switch command, and sends a release command in a target cell to release a source cell after successfully randomly accessing a target network device. The source network device is a network device accessed before the terminal device receives the switch command, and the target network device is a network device accessed after the terminal device performs network device handover.

### 3. Logical channel (logical channel, LCH) and RLC bearer (RLC bearer)

The logical channel is a channel between an RLC layer and a lower protocol layer (for example, a MAC layer). Channels between different RLC entities and the lower-layer protocol layer are different logical channels. The logical channel may also be referred to as a MAC logical channel. A configuration of an RLC bearer includes a configuration of an RLC entity and a logical channel. One logical channel corresponds to one logical channel identifier (logical channel identifier, LCID), and a specific logical channel may be determined based on an LCID. Because the configuration of the RLC bearer includes the logical channel, a specific RLC bearer may also be determined based on the LCID, that is, different RLC bearers may be distinguished based on different LCIDs. For example, based on the RLC bearer and the logical channel shown in FIG. 3, a configuration of an RLC bearer 1 includes a configuration of an RLC entity 1 and a logical channel 1, and a configuration of an RLC bearer 2 includes a configuration of an RLC entity 2 and a logical channel 2. In this case, the RLC bearer 1 may be identified based on an LCID 1 (the LCID 1 is an identifier of the logical channel 1), and the RLC bearer 2 may be identified based on an LCID 2 (the LCID 2 is an identifier of the logical channel 2).

In this application, an RLC bearer on a PC5 link may be briefly described as a PC5 RLC bearer, and an RLC bearer on a Uu link may be briefly described as a Uu RLC bearer.

### 4. PDCP re-establishment, PDCP data recovery, RLC re-establishment, and MAC resetting

The PDCP re-establishment is a PDCP entity re-establishment. During PDCP re-establishment, a transmitting PDCP entity behaves differently from a receiving PDCP entity. The PDCP re-establishment is applicable to an AM data radio bearer (data radio bearer, DRB), a UM DRB, and a signaling radio bearer (signaling radio bearer, SRB). For PDCP re-establishment of an AM DRB, a UM DRB, and an SRB, security needs to be changed. In other words, new ciphering algorithms, integrity protection algorithms, and keys are used. Other behaviors are different.

When an RRC layer needs the PDCP entity re-establishment, an NR transmitting PDCP entity needs to:
reset a compression protocol stack (if a compression function is configured but a continuous compression function is not configured);
for the UM DRB and the SRB, set a next count (TX _NEXT) to be transmitted to an initial value;
for the SRB, discard all stored PDCP service data units (service data units, SDUs) and PDCP protocol data units (protocol data units, PDUs);
during the PDCP re-establishment, use a ciphering algorithm and a key that are provided by an upper layer;
during the PDCP re-establishment, use an integrity protection algorithm and a key that are provided by an upper layer;
for the UM DRB, for each PDCP SDU already associated with a sequence number (sequence number, SN) but for which a corresponding PDCP PDU has not been submitted to a lower layer, and for an AM DRB whose Uu interface is suspended, from a first corresponding PDCP SDU for which reception of a PDCP PDU has not been acknowledged by a bottom layer but already associated with an SN (this part is improved in this application):
   consider that the PDCP SDUs are received from the upper layer, and perform transmission of the PDCP SDUs in ascending order of counts (COUNTs) associated with the PDCP SDUs prior to the PDCP re-establishment without restarting a discard timer; and
   for an AM DRB whose Uu interface is not suspended, from a first corresponding PDCP SDU for which reception of a PDCP PDU has not been acknowledged by a bottom layer, perform retransmission or transmission of all PDCP SDUs in ascending order of counts associated to the PDCP SDUs prior to the PDCP re-establishment (this part is improved in this application):
      perform compression, and perform integrity protection and ciphering based on a count associated with the PDCP SDU.

When the RRC layer needs the PDCP entity re-establishment, an NR receiving PDCP entity needs to:
process a PDCP PDU delivered and re-established by the bottom layer;
for the SRB, discard all the stored PDCP SDUs and PDCP PDUs;
for the SRB and the UM DRB, if a reordering timer is running,
stop and reset the reordering timer;
for the UM DRB, decompress all stored PDCP SDUs, and deliver decompressed PDCP SDUs to the upper layer in ascending order of associated counts;
for an AM DRB over the Uu interface, perform decompression if the continuous compression function is not configured;
for an AM DRB over a PC5 interface, decompress all stored PDCP internet protocol (internet protocol, IP) SDUs;
for the UM DRB and the AM DRB, if the compression function is configured but continuous compression is not configured, reset the compression protocol stack;
for the UM DRB and the SRB, set a receiving variable and a delivery variable to initial values;
during PDCP re-establishment, use a ciphering algorithm and a key that are provided by the upper layer; and
during PDCP re-establishment, use an integrity protection algorithm and a key that are provided by the upper layer.

The PDCP data recovery refers to a data recovery process of a PDCP entity. Currently, data recovery applies only to an AM DRB. For the AM DRB, when an upper layer requests PDCP data recovery for an AM DRB, a transmitting PDCP entity retransmits, in ascending order of counts, all PDCP PDUs that are previously delivered to a re-established or released AM RLC entity and that are not determined to be received by the bottom layer. During the PDCP data recovery, the PDCP entity does not replace a new ciphering algorithm, integrity protection algorithm, and key.

The RLC re-establishment is an RLC entity re-establishment. When an RRC layer needs the RLC entity re-establishment, an NR RLC entity needs to discard all RLC SDUs, RLC SDU segments, and RLC PDUs, stop and reset all timers, and reset all variables to initial values. The RLC re-establishment in this application may alternatively be RLC release or release after the RLC re-establishment.

The MAC resetting refers to resetting of a MAC entity. When an upper layer needs MAC resetting, the MAC entity will:
initialize a token bucket (Bj) of each logical channel to 0;
initialize a token bucket corresponding to a logical channel in a sidelink resource allocation mode 1 configured by RRC on PC5 to 0;
stop all timers;
consider that all timing advance (timing advance, TA) timers expire;
set a new data indicator (new data indicator, NDI) in an uplink hybrid automatic repeat request (hybrid automatic repeat request, HARQ) process to 0;
set NDIs of all HARQ processes corresponding to monitoring of a physical downlink control channel (physical downlink control channel, PDCCH) in the sidelink resource allocation mode 1 to 0;
stop an ongoing random access procedure (if any);
discard a non-contention-based random access resource notified by using explicit signaling corresponding to 4-step random access and 2-step random access (if any);
clear a buffer of a message 3 (Msg 3);
clear a buffer of a message A (MSG A);
cancel a triggered scheduling request procedure (if any);
cancel a triggered buffer status reporting procedure (if any);
cancel a triggered power headroom reporting procedure (if any);
cancel triggered a consistent listen before talk (listen before talk, LBT) failure (if any);
cancel triggered beam failure recovery (beam failure recovery, BFR) (if any);
cancel a triggered sidelink buffer status reporting procedure (if any);
cancel a triggered preemption buffer status reporting procedure (if any);
cancel a triggered recommended bit rate querying procedure (if any);
cancel triggered uplink authorization acknowledgement of a configuration (if any);
cancel triggered sidelink authorization acknowledgement of a configuration (if any);
cancel triggered query of a required guard symbol (if any);
clear soft buffers of all downlink (downlink, DL) HARQ processes;
for each DL HARQ process, consider a next reception transmission of a transport block (transport block, TB) is as a first transmission;
release a cell-radio network temporary identifier (cell-radio network temporary identifier, C-RNTI) (if any);
reset all beam failure instance counters (BFI_COUNTER); and
reset all LBT counters (LBT_COUNTER).

If the upper layer requests specific sidelink resetting for the MAC entity for a PC5-RRC connection, the MAC entity shall:
refresh soft buffers of all sidelink processes of all TBs associated with the PC5-RRC connection;
consider that all the sidelink processes of all the TBs associated with the PC5-RRC connection are unoccupied;
cancel a triggered scheduling request procedure associated only with the PC5-RRC connection (if any);
cancel a triggered sidelink buffer status reporting procedure associated only with the PC5-RRC connection (if any);
cancel a triggered channel state information (channel state information, CSI) reporting procedure associated with the PC5-RRC connection (if any);
stop all timers associated with the PC5-RRC connection (if running);
reset a number of detected nonconsecutive transmissions associated with the PC5-RRC connection (numConsecutiveDTX); and
initialize a sidelink token bucket (SBj) of each logical channel associated with the PC5-RRC connection to zero.

The MAC resetting in this application may also be MAC releasing.

### 5. Hyper frame number (hyper frame number, HFN) and PDCP sequence number (sequence number, SN)

To ensure that transmitted data packets can be delivered to an application layer in sequence at a receive end, a method for allocating a sequence number to the data packet is used at a transmit end, that is, a count is allocated to the data packet at a PDCP layer. The count occupies 32 bits (bits), and includes two parts: an HFN and a PDCP SN. In a data packet transmission process, the PDCP SN and the data packet are sent to the receive end at the same time, and an HFN status is maintained at the transmit end and the receive end respectively. The HFN statuses on the two sides need to be synchronized. The purpose of using the HFN is to limit a quantity of bits of the PDCP SN transmitted over an air interface.

It should be noted that, unless otherwise specified, an SN in this application refers to a PDCP SN.

### 6. Upper protocol layer and lower protocol layer

In embodiments of this application, an upper-lower relationship between protocol layers is defined as follows. In a process of sending a data packet by a device, a protocol layer that first processes a data packet is above a protocol layer that later processes a data packet, that is, the protocol layer that first processes the data packet may be considered as an upper protocol layer of the protocol layer that later processes the data packet. Alternatively, in a process of receiving a data packet by a device, a protocol layer that first processes a data packet is below a protocol layer that later processes a data packet, that is, the protocol layer that first processes the data packet may be considered as a lower protocol layer of the protocol layer that later processes the data packet.

For example, as shown in (a) in FIG. 2, in the protocol stack of the relay terminal device, the adapt layer is an upper protocol layer of the RLC layer, the MAC layer, and the PHY layer, and the RLC layer, the MAC layer, and the PHY layer are lower protocol layers of the adapt layer.

In this application, an upper protocol layer is referred to as an upper layer for short, and a lower protocol layer is referred to as a lower layer or a bottom layer for short.

### 7. SDU and PDU

In a communication network, a data unit exchanged between peer protocol layer entities between different devices is a PDU. A protocol layer transfers a PDU of the protocol layer to a lower protocol layer via a service access point (service access point, SAP) (which may also be referred to as a service interface) provided by an adjacent lower protocol layer to the protocol layer, and the lower protocol layer indirectly completes exchange of the PDU of the protocol layer. The PDU of the protocol layer is used as an SDU of the lower protocol layer.

For example, for a protocol layer, if a data packet received by the protocol layer does not include a protocol layer header of the protocol layer, the data packet may be considered as an SDU of the protocol layer. If a data packet received by the protocol layer includes a protocol layer header of the protocol layer, the data packet may be considered as a PDU of the protocol layer. For example, for a PDCP layer, if a data packet received by the PDCP layer does not include a PDCP layer header, the data packet may be considered as an SDU of the PDCP layer; or if a data packet received by the PDCP layer includes a PDCP layer header, the data packet may be considered as a PDU of the PDCP layer.

A data packet mentioned in this application may be a PDCP SDU, or may be a PDCP PDU. Whether the data packet is the PDCP SDU or the PDCP PDU may be determined based on the foregoing definitions of the SDU and the PDU with reference to a specific scenario.

### 8. RLC acknowledgement feedback and PDCP status report

The RLC acknowledgement feedback is feedback indicating that an RLC layer acknowledges successful reception of a data packet. For example, in the following, RLC acknowledgement feedback from a source network device is feedback indicating that an RLC layer of the source network device acknowledges successful reception of a data packet. RLC acknowledgement feedback from a terminal device is feedback indicating that an RLC layer of the terminal device acknowledges successful reception of a data packet. When a terminal device directly communicates with a network device, a result displayed by RLC acknowledgement feedback only includes a case in which a transmit end considers that reception fails, but a receive end actually successfully receives, and a case in which an RLC layer of the transmit end acknowledges that reception succeeds, but the receive end fails to receive does not occur.

The PDCP status report indicates an SN or a count of a data packet unsuccessfully received by a PDCP entity. For example, the PDCP status report includes an SN of a first lost data packet (first missing SN, FMS) or a count of a first lost data packet (first missing COUNT, FMC). The PDCP status report may further include a bitmap (bitmap), and the bitmap is a group of 8 bits. If the PDCP status report includes the FMS, the bitmap indicates a receiving status of each data packet after the FMS; or if the PDCP status report includes the FMC, the bitmap indicates a receiving status of each data packet after the FMC. The receiving status includes successful reception and unsuccessful reception. For example, if a count of a data packet received by a receive end is {0, 1, 3, 5, 6, 7}, the FMC is 2, the bitmap includes 8 bits, and the 8 bits are respectively used to indicate receiving statuses of the data packets whose counts are 3 to 10. If a value of one bit is 1, it indicates that a corresponding data packet is successfully received, and the value of the bitmap may be 10111000.

It should be noted that the transmit end deletes a PDCP SDU when receiving feedback indicating that a PDCP layer acknowledges successful reception of a data packet from the receive end (that is, a source data packet is deleted and cannot be retransmitted later), or does not delete a PDCP SDU when receiving feedback indicating that an RLC layer acknowledges successful reception of a data packet (that is, a source data packet is not deleted and can be retransmitted later).

### 9. Radio bearer (radio bearer, RB)

RBs include DRBs and SRBs. The DRB is used to carry data. The SRB is used to carry signaling.

When a DRB is configured, a corresponding PDCP entity and an RLC bearer on an entire path are configured for the DRB. When transmitting a data packet by using a DRB, a terminal device specifically transmits the data packet by using an RLC bearer configured for the DRB. In this case, in these RLC bearers configured for the DRB, there is an association relationship between RLC bearers of two devices in direct communication on the path. There is also an association relationship between an RLC bearer for communicating with a previous hop and an RLC bearer for communicating with a next hop of the device on the path.

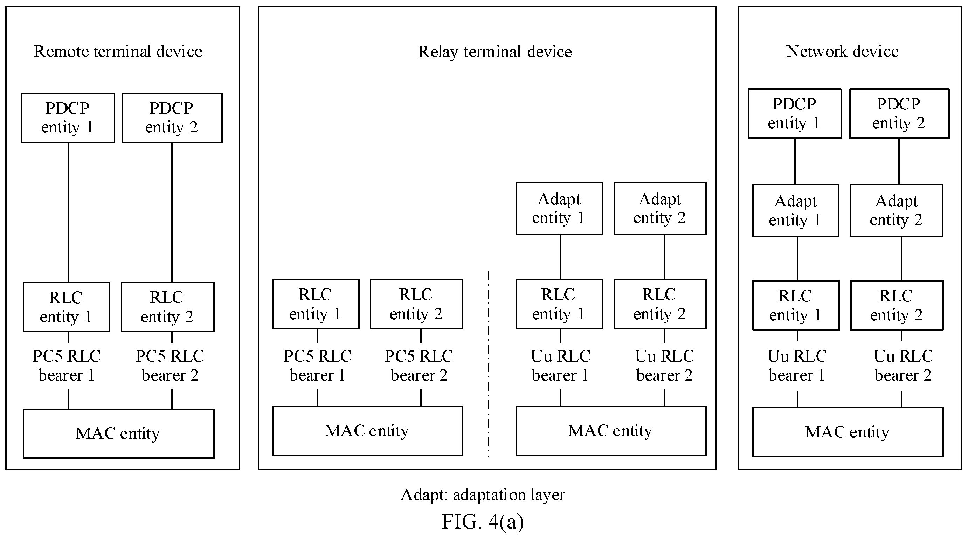

For example, when a path includes one relay terminal device, refer to FIG. 4(a). If a DRB 1 is configured, a configured PDCP entity includes a PDCP entity 1 of a remote terminal device and a PDCP entity 1 of a network device, and a configured RLC bearer includes a PC5 RLC bearer 1 of the remote terminal device, a PC5 RLC bearer 1 of the relay terminal device, a Uu RLC bearer 1 of the relay terminal device, and a Uu RLC bearer 1 of the network device. In this case, a procedure in which a terminal device sends a data packet by using the DRB 1 is as follows: A data packet of the PDCP entity 1 of the remote terminal device is sent by using the RLC bearer 1 of the remote terminal device. The PC5 RLC bearer 1 of the relay terminal device receives the data packet, and sends the data packet by using the Uu RLC bearer 1 of the relay terminal device. The Uu RLC bearer 1 of the network device receives the data packet, and delivers the data packet to the PDCP entity 1 of the network device for processing. In this case, there is an association relationship between the PC5 RLC bearer 1 of the remote terminal device and the PC5 RLC bearer 1 of the relay terminal device. There is an association relationship between the PC5 RLC bearer 1 of the relay terminal device and the Uu RLC bearer 1 of the relay terminal device. There is an association relationship between the Uu RLC bearer 1 of the relay terminal device and the Uu RLC bearer 1 of the network device.

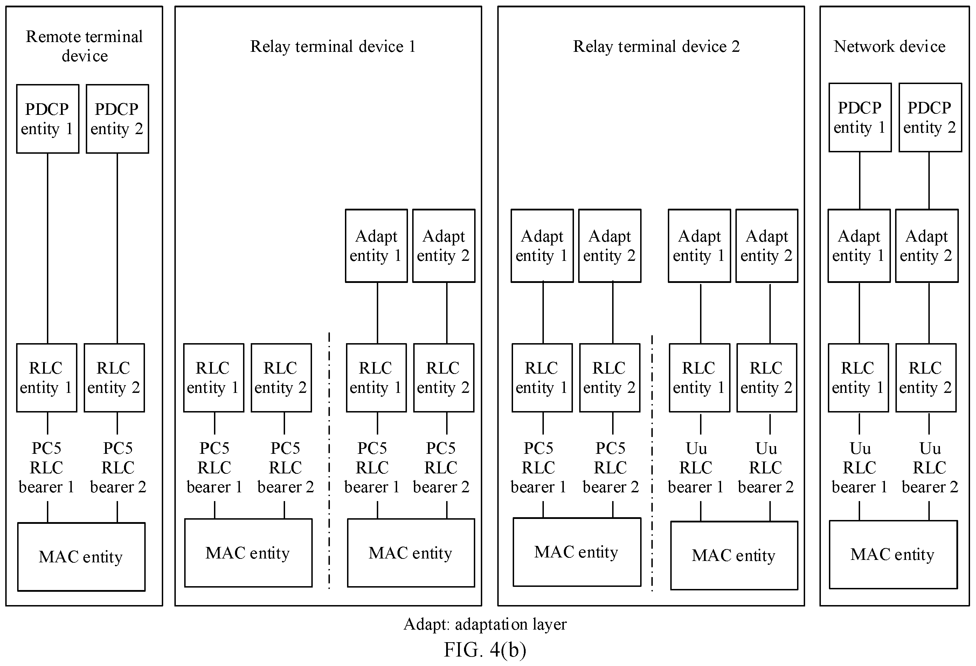

For example, when a path includes a plurality of relay terminal devices, refer to FIG. 4(b). If a DRB 1 is configured, a configured PDCP entity includes a PDCP entity 1 of a remote terminal device and a PDCP entity 1 of a network device, and a configured RLC bearer includes a PC5 RLC bearer 1 of the remote terminal device, a PC5 RLC bearer 1 of a relay terminal device 1 used to communicate with the remote terminal device, a PC5 RLC bearer 1 of the relay terminal device 1 used to communicate with a relay terminal device 2, a PC5 RLC bearer 1 of the relay terminal device 2, a Uu RLC bearer 1 of the relay terminal device 2, and a Uu RLC bearer 1 of the network device. In this case, there is an association relationship between the PC5 RLC bearer 1 of the remote terminal device and the PC5 RLC bearer 1 of the relay terminal device 1 used to communicate with the remote terminal device. There is an association relationship between the PC5 RLC bearer 1 of the relay terminal device 1 used to communicate with the remote terminal device and the PC5 RLC bearer 1 of the relay terminal device 1 used to communicate with the relay terminal device 2. There is an association relationship between the PC5 RLC bearer 1 of the relay terminal device 1 used to communicate with the relay terminal device 2 and the PC5 RLC bearer 1 of the relay terminal device 2. There is an association relationship between the PC5 RLC bearer 1 of the relay terminal device 2 and the Uu RLC bearer 1 of the relay terminal device 2. There is an association relationship between the Uu RLC bearer 1 of the relay terminal device 2 and the Uu RLC bearer 1 of the network device.

It should be noted that when a DRB is configured, a PDCP entity is configured for the DRB. Therefore, different PDCP entities may be distinguished based on different DRB IDs. If a working mode of an RLC entity in an RLC bearer configured for a DRB is an AM, the DRB may be referred to as an AM DRB. If a working mode of an RLC entity in an RLC bearer configured for a DRB is a UM, the DRB may be referred to as a UM DRB.

It can be learned from the foregoing description that a configuration of a DRB corresponds to a configuration of a higher layer (for example, a PDCP layer) part and a lower layer (for example, an RLC layer and a MAC layer) part. Therefore, when a DRB needs to be reconfigured (for example, in a scenario in which a remote terminal device switches from a first path to a second path in the following), a higher layer part needs to be reconfigured, that is, PDCP re-establishment or PDCP data recovery is performed, and a lower layer part needs to be reconfigured, that is, RLC re-establishment and MAC resetting are performed. For an AM DRB, PDCP re-establishment or PDCP data recovery is performed. For a UM DRB, PDCP re-establishment is performed, but PDCP data recovery is not performed.

In addition, an association relationship between an RLC bearer and an identifier of a terminal device may be further maintained on each device, to determine a specific RLC bearer used to transmit data of a specific RB of a specific terminal device. An association relationship between an RLC bearer in a relay terminal device and an identifier of a terminal device, and an association relationship between an RLC bearer that is of the relay terminal device and that communicates with a previous hop and an RLC bearer that is of the relay terminal device and that communicates with a next hop may be managed by using an adapt layer of the relay terminal device.

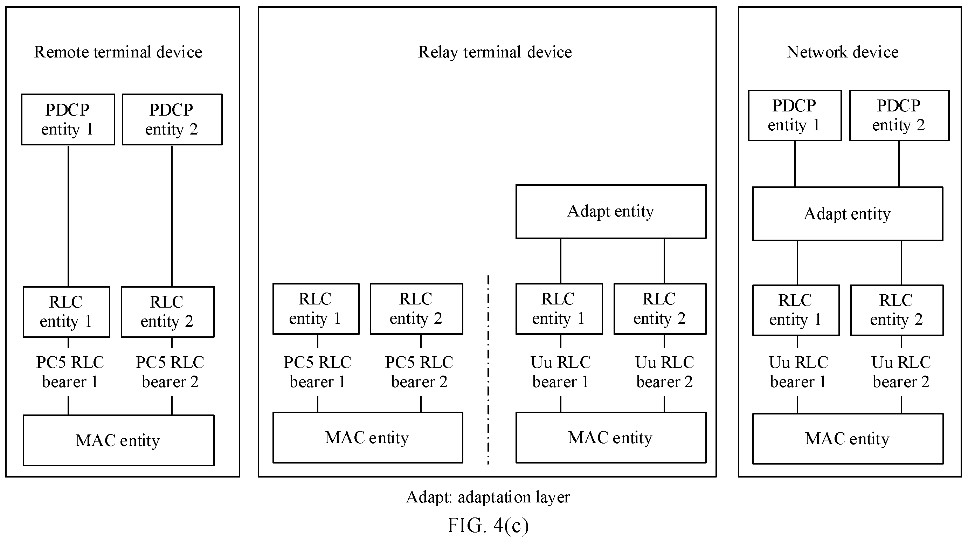

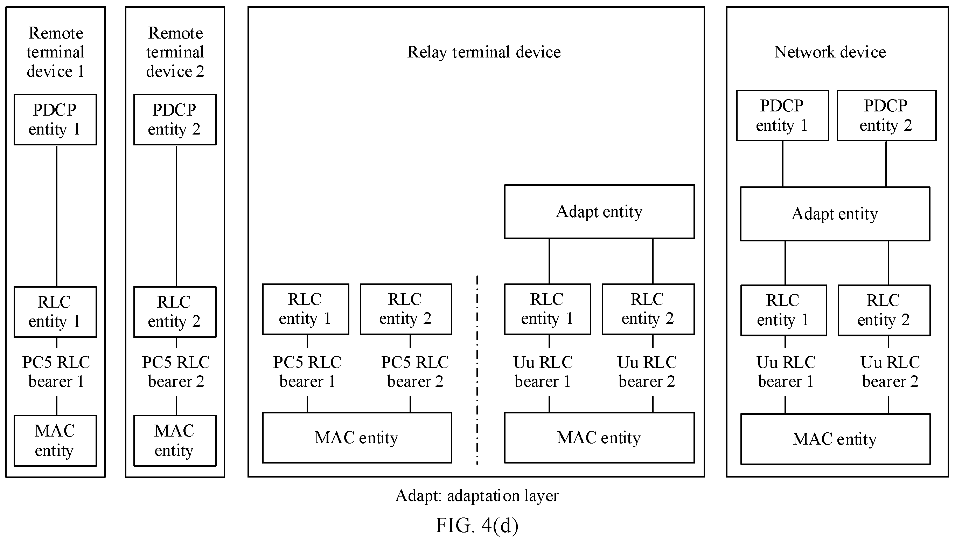

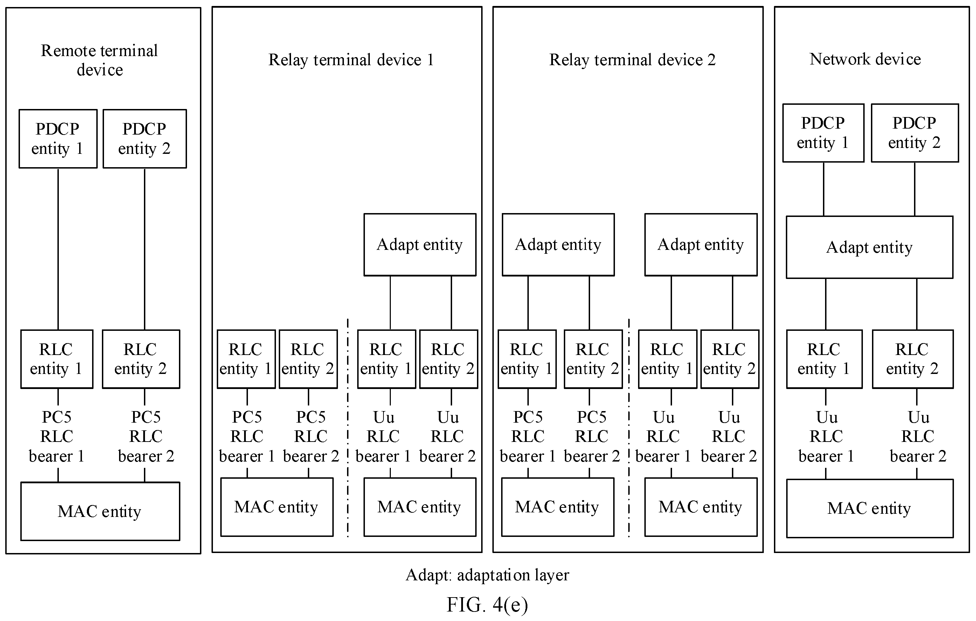

It should be noted that, in FIG. 4(a) and FIG. 4(b), a one-to-one correspondence between a PDCP entity and an RLC entity, and a one-to-one correspondence between an adapt entity and an RLC entity are used as an example for drawing, and a one-to-many relationship may also exist between these entities. For example, in FIG. 4(c), FIG. 4(d), and FIG. 4(e), a one-to-many correspondence is used as an example for drawing, a plurality of remote terminal devices correspond to one relay terminal device, and a same adapt entity is used. During actual implementation, the correspondence may be one-to-one, or may be many-to-one. This is not limited in this application.

The foregoing describes some content and concepts related to this application. Based on an understanding of the foregoing content and concepts, the following describes in detail technical problems that need to be resolved in this application.

In an L2 relay scenario, to ensure service continuity of a remote terminal device, the remote terminal device may perform path switch (path switch). For example, when a direct link (direct link) (that is, a link through which the remote terminal device directly communicates with a network device, namely, a Uu link) has poor quality, the remote terminal device may switch from the direct link to an indirect link (indirect link) (that is, a link through which the remote terminal device communicates with the network device via a relay terminal device, which may also be referred to as a relay link). For another example, because a location of the remote terminal device moves, quality of the direct link recovers, and a better service can be provided compared with that of the indirect link. In this case, the remote terminal device may switch back from the indirect link to the direct link. This process is similar to a cell handover procedure over an air interface and is referred to as path switch.

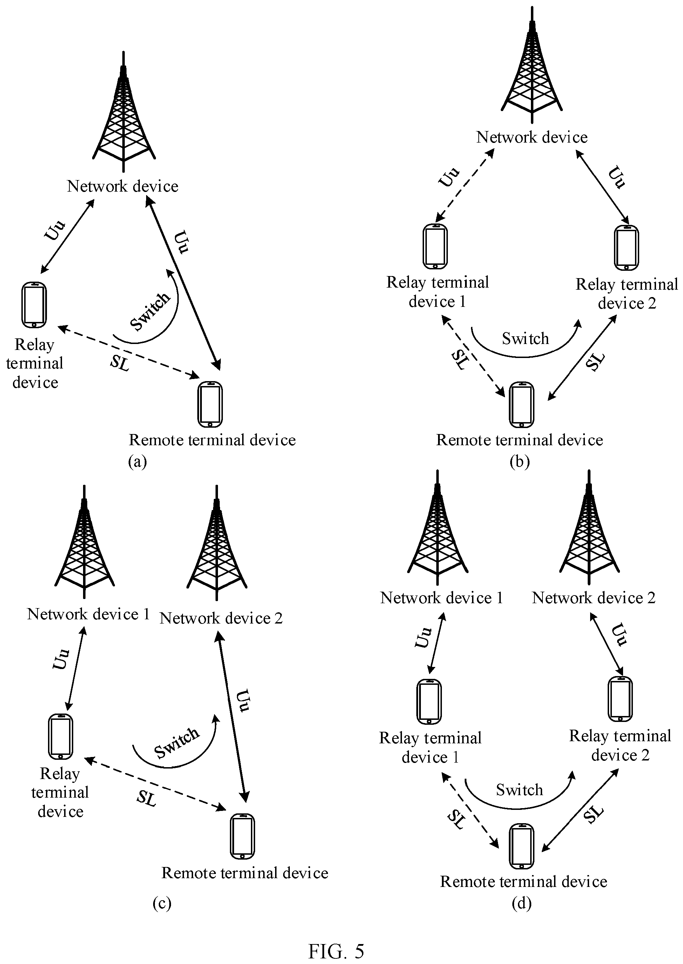

Path switch scenarios related to this application include four scenarios shown in (a) in FIG. 5, (b) in FIG. 5, (c) in FIG. 5, and (d) in FIG. 5. In the four scenarios, for an indirect link, an example in which the indirect link includes one relay terminal device is used for drawing. During actual implementation, the indirect link may also include a plurality of relay terminal devices.

A process in which a remote terminal device performs path switch is very similar to a handover (Handover, HO) process in which a terminal device is handed over between network devices in NR. For an AM DRB, the HO process is divided into three major procedures.

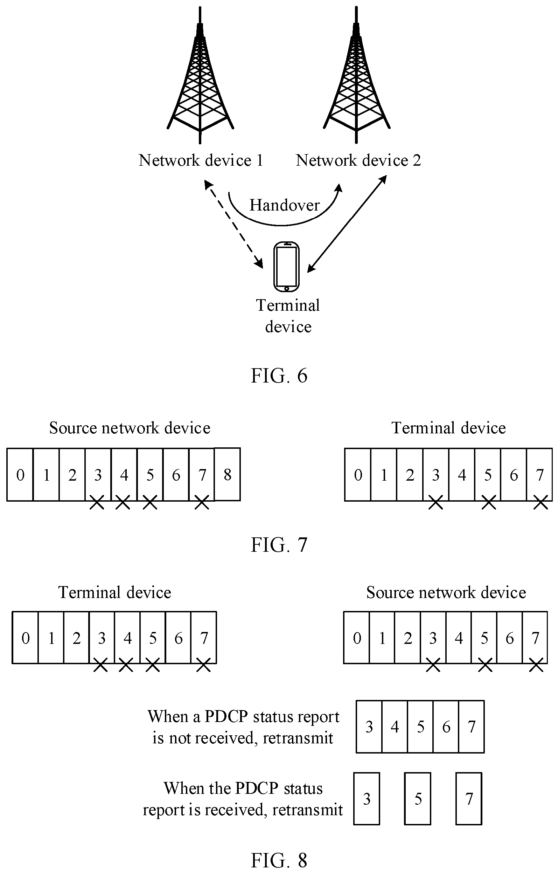

HO preparation phase: A source network device (for example, a network device 1 in FIG. 6) sends a handover request (Handover Request) to a target network device (for example, a network device 2 in FIG. 6). After receiving the handover request, the target network device performs access control based on a resource status of the target network device, and sends a handover request acknowledgement (Handover Request Ack) to the source network device if determining that a terminal device can access the target network device, where the handover request acknowledgement includes configuration information. The source network device sends the received configuration information to the terminal device by using an RRC reconfiguration message (RRC Reconfiguration message).

HO execution phase: In one aspect, the terminal device is disconnected from the source network device, and performs synchronization and random access with the target network device. In another aspect, for the AM DRB, the source network device sends an SN transfer status (transfer status) and an HFN to the target network device, to notify the target network device of a transmission status of a data packet. The SN transfer status may include an uplink (uplink, UL) SN transfer status and/or a downlink SN transfer status. The uplink SN transfer status includes at least an SN of a first uplink unsuccessfully received data packet, and may further include a bitmap. The bitmap indicates a receiving status of each data packet starting from the first uplink unsuccessfully received data packet. For a data packet unsuccessfully received by the source network device, the terminal device needs to perform retransmission to the target network device based on an acknowledgement of a bottom layer (for example, an RLC layer). The downlink SN transfer status includes an SN indicated by the source network device, and the SN is a first SN that is of a data packet not associated with an SN and that is indicated by the source network device to the target network device.

HO completion phase: The target network device sends a data path switch request to an access and mobility management function (access and mobility management function, AMF), and the AMF sends a path change request to a user plane function (user plane function, UPF). After receiving information that indicates successful data path switch and that is fed back by the AMF, the target network device sends, to the source network device, a request for releasing a context of the terminal device.

For a more specific process of HO, refer to section 9.2.3 of the 3rd generation partnership project (3rd Generation Partnership Project, 3GPP) technical specification (Technical Specification, TS) 38.300.

In an HO scenario, for an AM DRB, the following method 1 is used to ensure that a downlink data packet is not lost, and the following method 2 is used to ensure that an uplink data packet is not lost.

Method 1: Ensure that the downlink data packet is not lost.

The method 1 specifically includes the following.

For the AM DRB, in one aspect, the network device configures reporting of a PDCP status report for the terminal device. When PDCP re-establishment or PDCP data recovery occurs, the terminal device is triggered to report, to the target network device, information about a data packet that is received and a data packet that is not received. The target network device may transmit data to the terminal device based on the PDCP status report. In another aspect, the source network device performs data forwarding (data forwarding) to the target network device. In a data forwarding process, all data packets (which include a data packet that is sent by the source network device but for which RLC acknowledgement feedback from the terminal device is not received, and further include a data packet that is allocated by the source network device with an SN but is not sent to the terminal device) for which RLC acknowledgement feedback from the terminal device is not received, and corresponding SNs are first forwarded to the target network device in sequence, and then, data packets (the data packets are data packets to which no SN is allocated) received from the UPF are forwarded to the target network device. In addition, the source network device indicates, to the target network device in an SN status transfer message, a count (it is assumed that the count is a first count) that needs to be allocated to a downlink data packet to which no SN is allocated, so that when the target network device sends a data packet to the terminal device, the target network device continues to allocate an SN to an unassociated data packet.

The target network device first sends, to the terminal device, the data packet to which the SN is allocated and that is forwarded by the source network device (that is, a downlink retransmitted data packet is a data packet that is sent by the source network device but for which RLC acknowledgement feedback from the terminal device is not received), and then sends, to the terminal device, a data packet that is forwarded by the source network device and to which no SN is allocated. The target network device reallocates counts to these data packets to which no SN is allocated, and a start of these counts is the first count. If the target network device receives the PDCP status report sent by the terminal device, the target network device does not need to send, to the terminal device, an already received data packet acknowledged in the PDCP status report.

After receiving the data packets from the target network device, the PDCP layer of the terminal device reorders the data packets, and sequentially delivers the data packets to an upper layer of the PDCP layer.

In the method 1, for example, as shown in FIG. 7, a PDCP entity of a source network device has delivered a data packet whose SN is 7 to a bottom-layer entity (for example, an RLC entity), and an SN associated with a current data packet has reached 8. The source network device sends data packets whose SNs are 1 to 7 to a terminal device, and the terminal device receives the data packets whose SNs are {0, 1, 2, 4, 6}. For the data packets whose SNs are {0, 1, 2, 6}, the terminal device sends acknowledgement feedback from an RLC layer to the source network device, and for the data packet whose SN is 4, the terminal device does not have time to send RLC acknowledgment feedback to the source network device (if the data packet is a PDCP PDU, this is specifically acknowledgement feedback for a PDU of an RLC corresponding to the PDCP PDU). In this case, the terminal device performs cell handover, and the source network device may forward, to the target network device, data packets (namely, data packets whose SNs are {3, 4, 5, 7, 8}) for which acknowledgement feedback from a bottom layer (for example, an RLC layer) of the terminal device is not received, and an unnumbered data packet, and indicate an SN (namely, 9) corresponding to a first data packet not associated with an SN and a corresponding HFN. After receiving the information, the target network device may send the data packets whose SNs are {3, 4, 5, 7, 8} to the terminal device, and then number, starting from SN = 9, an unnumbered data packet received by the source network device, and send a numbered data packet to the terminal device.

Method 2: Ensure that the uplink data packet is not lost.

The source network device indicates an HFN to the target network device, and indicates, by using an SN status transfer message, an FMS and a bitmap indicating a data packet receiving status of the source network device to the target network device. An N^{th} bit (N is an integer greater than 0) in the bitmap indicates a receiving status of an N^{th} data packet starting from an FMC (determined by the HFN and the FMS). If a value is 1, it indicates that the data packet is successfully received. If a value is 0, it indicates that the data packet is not received. The target network device may generate a PDCP status report based on the information in the SN status transfer message, and send the PDCP status report to the terminal device.

The source network device forwards out-of-order received (that is, discontinuous) data packets and corresponding SNs to the target network device in the data forwarding process.

Starting from a first data packet for which RLC acknowledgement feedback from the source network device is not received, the terminal device sends data packets to the target network device in ascending order of counts (that is, uplink retransmitted data packets are all data packets starting from the first data packet for which the RLC acknowledgement feedback from the source network device is not received). If the terminal device receives the PDCP status report sent by the target network device, the terminal device deletes, from the PDCP status report, a received data packet that has been fed back. If a current data packet has not been sent, the terminal device does not need to send the data packet to the target network device.

In the method 2, for example, as shown in FIG. 8, a PDCP entity of a terminal device has delivered a data packet whose SN is 7 to a bottom-layer entity (for example, an RLC entity). After the terminal device sends the data packets whose SNs are 1 to 7, the source network device receives the data packets whose SNs are {0, 1, 2, 4, 6}. For the data packets whose SNs are {0, 1, 2, 6}, the source network device sends RLC acknowledgement feedback to the terminal device, and for the data packet whose SN is 4, the source network device does not have time to send RLC acknowledgment feedback to the terminal device (if the data packet is a PDCP PDU, this is specifically acknowledgement feedback for a PDU of an RLC corresponding to the PDCP PDU). In this case, the terminal device performs cell handover, and the source network device sends an FMC (namely, a count corresponding to SN = 3) and a bitmap (namely, 10100000, indicating that data packets whose SNs are {5, 7} and after 7 are not received) to the target network device. The target network device may determine, based on this, a received data packet, and may send the PDCP status report to the terminal device. Then, PDCP re-establishment or PDCP data recovery occurs in the PDCP entity corresponding to the AM DRB, and the terminal device determines, based on the RLC acknowledgement feedback from the source network device, that the data packets whose SNs are {0, 1, 2, 6} have been successfully received. In a new cell, the terminal device retransmits all subsequent data packets starting from a first data packet for which RLC acknowledgement feedback is not received (namely, the data packet whose SN is 3). If the terminal device receives, after the handover, the PDCP status report sent by the target network device, where the PDCP status report indicates that the data packets whose SNs are {3, 5, 7} are not received and the data packets whose SNs are {4, 6} are received, the terminal device deletes, at the PDCP layer based on the PDCP status report, the data packets that have been received by the target network device (that is, the data packets whose SNs are {4, 6} are deleted). In this case, when performing retransmission, the terminal device only needs to retransmit the data packets whose SNs are {3, 5, 7}, to save uplink resources.

In the method 1 and the method 2, the AM DRB is used as an example to describe an example of a process of ensuring that the data packet is not lost in the HO scenario. For a UM DRB, retransmission is not performed on the UM DRB. In this case, uplink transmission is used as an example. Before the terminal device performs cell handover, some data packets may be numbered by the PDCP layer of the terminal device, but these data packets are not delivered to the RLC layer. In this case, cell handover occurs. In this case, the terminal device renumbers, starting from SN = 0, a data packet with a minimum count in these data packets, and sequentially sends the data packets to the target network device in ascending order of counts. For example, based on the example shown in FIG. 8, if the PDCP entity of the terminal device has not delivered a data packet whose SN is 8 to the RLC layer before the cell handover, and in this case, cell handover occurs, the terminal device renumbers, starting from SN = 0, the data packet whose SN is 8, and sends data packets to the target network device in ascending order of counts. In this case, it may be understood that the target network device loses the data packets whose SNs are {3, 5, 7}. It can be learned that, for the UM DRB, HO causes packet loss.

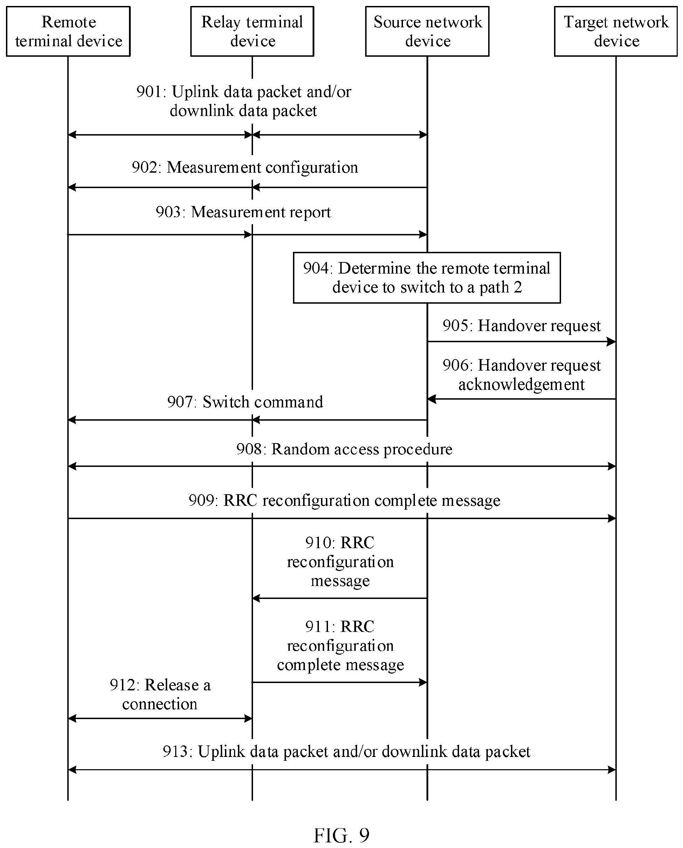

Based on the path switch scenario shown in (c) in FIG. 5, a path through which the remote terminal device communicates with a network device 1 via a relay terminal device is referred to as a path 1, and a path through which the remote terminal device communicates with a network device 2 through a Uu link is referred to as a path 2. Refer to FIG. 9. A process in which the remote terminal device performs path switch (switches from the path 1 to the path 2) includes the following steps.

901: The remote terminal device communicates an uplink data packet (UL data) and/or a downlink data packet (DL data) with a source network device (namely, the network device 1) via the relay terminal device (or through the path 1).

902: The source network device sends a measurement configuration (measurement configuration) to the remote terminal device via the relay terminal device. Correspondingly, the remote terminal device receives the measurement configuration sent by the source network device.

903: The remote terminal device performs measurement based on the measurement configuration, and sends a measurement report (measurement report) to the source network device via the relay terminal device. Correspondingly, the source network device receives the measurement report from the remote terminal device.

The step 902 and the step 903 are optional steps.

904: The source network device determines the remote terminal device to switch to the path 2.

When the step 902 and the step 903 exist, the source network device may determine, based on the measurement report, the remote terminal device to switch to the path 2. Otherwise, the source network device may determine, based on other information, the remote terminal device to switch to the path 2.

905: The source network device sends a handover request to a target network device (namely, the network device 2). Correspondingly, the target network device receives the handover request sent by the source network device.

906: The target network device performs access control based on the handover request, and sends a handover request acknowledgement to the source network device if determining that the terminal device can access the target network device. When the source network device and the target network device are a same network device, the step 905 and the step 906 are not required.

907: The source network device sends a switch command to the remote terminal device via the relay terminal device, where the switch command indicates the remote terminal device to switch from being connected to the source network device through the path 1 to being connected to the target network device through the path 2. Correspondingly, the remote terminal device receives the switch command sent by the source network device.

The switch command may be an RRC reconfiguration message (RRC Reconfiguration message). There is no strict sequence between the step 907, and the steps 905 and 906.

908: The remote terminal device performs a random access procedure with the target network device under the indication of the switch command, and accesses the target network device by using the random access procedure.

909: The remote terminal device sends an RRC reconfiguration complete message (RRC Reconfiguration Complete message) to the target network device. Correspondingly, the target network device receives the RRC reconfiguration complete message sent by the remote terminal device, and determines that RRC reconfiguration is completed.

910: The source network device sends an RRC reconfiguration message to the relay terminal device. Correspondingly, the relay terminal device receives the RRC reconfiguration message sent by the source network device.

911: The relay terminal device removes, based on the RRC reconfiguration message, a configuration related to the remote terminal device from the relay terminal device, and sends an RRC reconfiguration complete message to the source network device.

The step 910 and the step 911 are optional steps. The step 910 and the step 911 are performed after the step 904, and there is no strict sequence between the steps 910 and 911 and another step.

912: The remote terminal device releases a connection to the relay terminal device.

The source network device or the target network device may indicate the remote terminal device to release the connection, and the source network device may indicate the relay terminal device to release the connection.

The step 912 is an optional step.

913: The remote terminal device communicates an uplink data packet and/or a downlink data packet with the target network device through the path 2.

FIG. 9 shows only an example of some steps of the process in which the remote terminal device performs path switch. During actual implementation, there may be another step. For example, the target network device may interact with a core network device. Because this is not involved in this application, details are not described.

In FIG. 9, the scenario shown in (c) in FIG. 5 is used as an example to describe an example of the process in which the remote terminal device performs path switch. A difference between a process in which the remote terminal device performs path switch in the scenario shown in (a) in FIG. 5 and the process shown in FIG. 9 lies only in that the source network device and the target network device are a same device. Therefore, steps performed by the source network device and the target network device are performed by the same network device. Steps of interaction (namely, the step 905 and the step 906) between the source network device and the target network device are no longer involved. A difference between a process in which the remote terminal device performs path switch in the scenario shown in (b) in FIG. 5 and the process shown in FIG. 9 lies only in that a source network device and a target network device are a same device. Therefore, steps performed by the source network device and the target network device are performed by the same network device. Steps (that is, the step 905 and the step 906) of interaction between the source network device and the target network device are no longer involved. The random access procedure in the step 908 is not performed. Instead, the remote terminal device establishes a PC5 connection to a relay terminal device 2, and then sends the RRC reconfiguration complete message in the step 909 to the target network device via the relay terminal device 2. In a subsequent process, the remote terminal device performs uplink and downlink transmission with the target network device via the relay terminal device 2. A difference between the process in which the remote terminal device performs path switch in the scenario shown in (d) in FIG. 5 and the process shown in FIG. 9 lies only in that the random access procedure in the step 908 is not performed. Instead, the remote terminal device establishes a PC5 connection to a relay terminal device 2, and then sends the RRC reconfiguration complete message in the step 909 to a target network device via the relay terminal device 2. In a subsequent process, the remote terminal device performs uplink and downlink transmission with the target network device via the relay terminal device 2.

When the remote terminal device receives the switch command, a PDCP entity corresponding to an AM DRB needs to perform PDCP re-establishment or PDCP data recovery. In this case, according to a path switch procedure, data transmission between the remote terminal device and the relay terminal device, and between the relay terminal device and the source network device needs to be stopped. In this case, when the remote terminal device switches from a path that includes a relay terminal device to another path, if a retransmission mechanism in the HO scenario is applied to the path switch scenario, packet loss exists or is aggravated. The following specifically analyzes four cases.

### Case (1): uplink data of an AM DRB

In the case (1), for the uplink data of the AM DRB, the PDCP entity of the remote terminal device determines, based on RLC acknowledgement feedback from the relay terminal device, PDCP layers of which data packets have been successfully transmitted. After PDCP re-establishment or PDCP data recovery, retransmission is performed on data packets starting from a first data packet that is not acknowledged to be successfully received by the RLC.

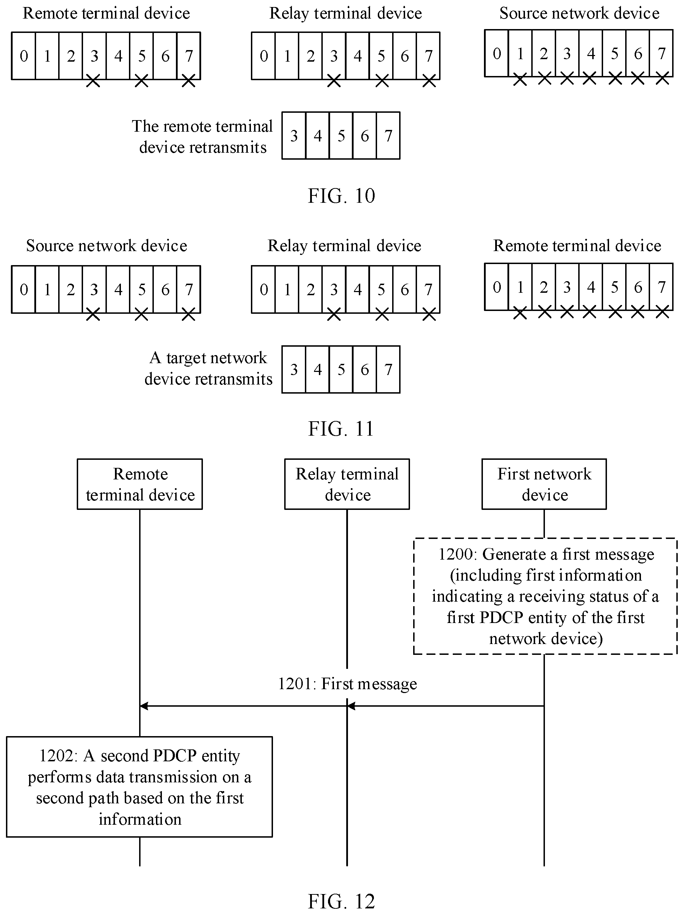

For example, refer to FIG. 10. A remote terminal device sends data packets whose SNs are {0, 1, 2, 3, 4, 5, 6, 7}. A relay terminal device receives the data packets whose SNs are {0, 1, 2, 4, 6}. The remote terminal device determines, based on RLC acknowledgement feedback from the relay terminal device, that the data packets whose SNs are {0, 1, 2, 4, 6} are successfully received. After the relay terminal device sends the data packet whose SN is 1 to a source network device, a path of the remote terminal device is switched. In this case, none of the data packets whose SNs are {1, 2, 3, 4, 5, 6, 7} is received by the source network device. After PDCP re-establishment or PDCP data recovery, the remote terminal device retransmits a subsequent data packet starting from the data packet whose SN is 3 (namely, a first unsuccessfully received data packet acknowledged by a bottom layer (for example, an RLC layer)), and the data packets whose SNs are {1, 2} are lost.

### Case (2): downlink data of an AM DRB

In the case (2), for the downlink data of the AM DRB, the PDCP entity of the remote terminal device waits for retransmission by a target network device after PDCP re-establishment or PDCP data recovery. If the target network device does not configure a PDCP status report, packet loss may be caused.

For example, refer to FIG. 11. A source network device sends data packets whose SNs are {0, 1, 2, 3, 4, 5, 6, 7}. A relay terminal device receives the data packets whose SNs are {0, 1, 2, 4, 6}. The source network device determines, based on RLC acknowledgement feedback from the relay terminal device, that the data packets whose SNs are {0, 1, 2, 4, 6} are successfully received. After the relay terminal device sends a data packet whose SN is 1 to a remote terminal device, a path of the remote terminal device is switched. In this case, none of the data packets whose SNs are {1, 2, 3, 4, 5, 6, 7} is received by the remote terminal device. After PDCP re-establishment or PDCP data recovery, a target network device retransmits the data packets whose SNs are {3, 5, 7}, and the data packets whose SNs are {1, 2, 4, 6} are lost. For interaction between the source network device and the target network device, refer to the HO process. Details are not described herein again.

For this case, in this application, the target network device may retransmit a subsequent data packet starting from the data packet whose SN is 3 (namely, a first unsuccessfully received data packet acknowledged by a bottom layer (for example, an RLC layer)), and the data packets whose SNs are {1, 2} are lost. This method can alleviate packet loss, but the packet loss still occurs.

### Case (3): uplink data of a UM DRB

In the case (3), for the uplink data of the UM DRB, after PDCP reestablishment, the PDCP entity of the remote terminal device transmits only a data packet that has not been previously delivered to a bottom layer (for example, an RLC layer). In this case, all data packets that are sent by the remote terminal device to the relay terminal device but not sent by the relay terminal device to the source network device are lost.

For example, refer to FIG. 10. A PDCP entity of the remote terminal device delivers the data packets whose SNs are {0, 1, 2, 3, 4, 5, 6, 7} to an RLC entity. The RLC entity sends data packets whose corresponding PDCP SNs are {0, 1, 2, 3, 4, 5, 6, 7}. The relay terminal device receives the data packets whose corresponding PDCP SNs are {0, 1, 2, 4, 6}. After the relay terminal device sends, to the source network device, the data packet whose corresponding PDCP SN is 1 and that is received from the remote terminal device, a path of the remote terminal device is switched. In this case, none of the data packets whose SNs are {1, 2, 3, 4, 5, 6, 7} is received by the source network device. Retransmission is not performed on the UM DRB. Therefore, the data packets whose SNs are {1, 2, 3, 4, 5, 6, 7} are all lost. This aggravates packet loss.

### Case (4): downlink data of a UM DRB

In the case (4), after PDCP re-establishment, the source network device transmits only a data packet that has not been previously delivered to a bottom layer. In this case, all data packets that are sent by the source network device to the relay terminal device but not sent by the relay terminal device to the remote terminal device are lost.

For example, refer to FIG. 11. The source network device sends data packets whose PDCP SNs are {0, 1, 2, 3, 4, 5, 6, 7}. The relay terminal device receives the data packets whose corresponding PDCP SNs are {0, 1, 2, 4, 6}. After the relay terminal device sends the data packet whose corresponding PDCP SN is 1 to the remote terminal device, a path of the remote terminal device is switched. In this case, none of the data packets whose SNs are {1, 2, 3, 4, 5, 6, 7} is received by the remote terminal device. After PDCP re-establishment, the target network device does not retransmit the data packets. Therefore, the data packets whose SNs are {1, 2, 3, 4, 5, 6, 7} are all lost. This aggravates packet loss.

To resolve a problem of packet loss caused when a remote terminal device switches from a path that includes a relay terminal device to another path, this application provides a data transmission method. In the method, for an uplink data packet, a source network device sends a receiving status of a PDCP layer, so that the remote terminal device can perform data transmission based on the receiving status of the PDCP layer sent by the source network device, to avoid or reduce loss of the uplink data packet. For a downlink data packet, the remote terminal device may send a receiving status of a PDCP layer to a target network device, so that the target network device can perform data transmission based on the receiving status of the PDCP layer sent by the remote terminal device, to avoid or reduce loss of the downlink data packet. The following separately describes the method provided in this application by using examples for the uplink data packet (denoted as an uplink scenario) and the downlink data packet (denoted as a downlink scenario). It should be noted that the solutions in the two scenarios may be implemented separately, or may be implemented together. This is not limited in this application.

### Uplink scenario

In the uplink scenario, loss of the uplink data packet can be avoided or reduced by using the following solution 1 or solution 2.

### Solution 1

In the solution 1, as shown in FIG. 12 (an example in which a first path includes one relay terminal device is used for drawing), the data transmission method provided in this application includes the following steps.

1201: A first network device sends a first message to a remote terminal device, where the first message includes first information, and the first information indicates a receiving status of a first PDCP entity of the first network device. Correspondingly, the remote terminal device receives the first message sent by the first network device.

In the solution 1, the receiving status of the first PDCP entity is used for data transmission of a second PDCP entity of the remote terminal device (for example, when a DRB (denoted as a first DRB) corresponding to the first information is an AM DRB, the receiving status of the first PDCP entity is used to assist the remote terminal device in performing uplink retransmission). The first information corresponds to a receiving status of the first PDCP entity before path switch of the first DRB. The first PDCP entity is a PDCP entity corresponding to a first DRB on the first network device, and the second PDCP entity is a PDCP entity corresponding to a first DRB on the remote terminal device.

In the solution 1, optionally, the first message indicates the remote terminal device to switch from being connected to the first network device (namely, the source network device) through the first path to being connected to a second network device (namely, the target network device) through a second path. In other words, the first message is a switch command. The first path includes at least one relay terminal device, and the second path includes at least one relay terminal device or does not include a relay terminal device. For example, the first message may be an RRC reconfiguration message. The first network device may send the first message to the remote terminal device through the first path.

In the solution 1, optionally, the second network device and the first network device may be a same network device (for example, the scenarios shown in (a) in FIG. 5 and (b) in FIG. 5), or may be different network devices (for example, the scenarios shown in (c) in FIG. 5 and (d) in FIG. 5).

In the solution 1, optionally, the first message further includes information about a DRB (namely, a first DRB) corresponding to the first information, or the first message further includes information indicating the first PDCP entity. The information about the DRB may be an identifier (ID) of the DRB. The information about the first DRB is carried in the first message, so that the remote terminal device can determine a PDCP entity whose receiving status is indicated by the first information. The first DRB may be a UM DRB, or may be an AM DRB. Further, the first message may further include information indicating whether the DRB is the UM DRB or the AM DRB. In this case, the remote terminal device can determine, based on the indication, whether the first DRB is the UM DRB or the AM DRB.

It should be noted that the path switch of the remote terminal device in this application may also be understood as path switch of a DRB of the remote terminal device, and the first DRB may be any one of the DRBs of the remote terminal device. In this application, the method provided in embodiments of this application is described by using path switch of the first DRB as an example. During actual implementation, each DRB of the remote terminal device needs to be switched. A switching process is similar to a switching process of the first DRB. For understanding, reference may be made and details are not described again.

In the solution 1, optionally, the first information may have the following several cases.

Case 1: The first information indicates an SN or a count of a first data packet unsuccessfully received by the first PDCP entity. For example, the first information may be an FMS or an FMC.

Case 2: The first information indicates an SN or a count of a data packet unsuccessfully received by the first PDCP entity. For example, the first information may be an FMS and a bitmap, and the bitmap indicates a receiving status of each data packet after the FMS. For example, the first information may alternatively be an FMC and a bitmap, and the bitmap indicates a receiving status of each data packet after the FMC. In the two examples, one bit in the bitmap indicates a receiving status of a data packet. For example, when a value of one bit is 1, it indicates that a corresponding data packet is successfully received, and when a value of one bit is 0, it indicates that a corresponding data packet is unsuccessfully received, and vice versa. In the case 2, the first information may be a PDCP status report.

Case 3: The first information indicates an SN or a count of a data packet successfully received by the first PDCP entity. For example, the first information may be a bitmap. The bitmap indicates a receiving status of each data packet. One bit in the bitmap indicates a receiving status of one data packet. For example, when a value of one bit is 1, it indicates that a corresponding data packet is successfully received, and when a value of one bit is 0, it indicates that a corresponding data packet is unsuccessfully received, and vice versa.

Case 4: The first information indicates an SN or a count of a last data packet successfully received by the first PDCP entity. For example, the first information indicates an SN or a count corresponding to a data packet with a maximum count in successfully received data packets.

Case 5: The first information indicates a value obtained by adding 1 to a maximum SN or count of a data packet successfully received by the first PDCP entity. In the case 5, the first information indicates an SN or a count (RX_NEXT) of a data packet that the first network device expects to receive. To be specific, the first information is an SN (NEXT Receive SN, NRS) of a next data packet expected to be received or a count (NEXT Receive COUNT, NRC) of a next data packet expected to be received.

It should be noted that the first information is determined based on a data packet receiving status of the first PDCP entity before path switch.

Optionally, as shown in FIG. 12, before the step 1201, the method further includes the following step. 1200: The first network device generates the first message.

1202: The second PDCP entity of the remote terminal device performs data transmission on the second path based on the first information.

The step 1202 may be specifically implemented in the following manner 1 or manner 2.

Manner 1: The second PDCP entity is a PDCP entity corresponding to an AM DRB (that is, the first DRB is the AM DRB), and the second PDCP entity retransmits and/or transmits, based on the first information and starting from a first unsuccessfully received data packet (a data packet of the PDCP layer, for example, a PDCP SDU), data packets in ascending order of counts of the data packets.

In the manner 1, it may be understood that, because the first information indicates the receiving status of the first PDCP entity, the first unsuccessfully received data packet determined based on the first information is an unsuccessfully received data packet acknowledged by the first PDCP entity other than an unsuccessfully received data packet acknowledged by the RLC layer. The second PDCP entity determines a data packet receiving status based on the first information, and performs retransmission and/or transmission, starting from the first unsuccessfully received data packet instead of a first data packet that is not acknowledged to be successfully received by the bottom layer (for example, the RLC layer), in ascending order of counts.

If the first information is the foregoing case 1, the second PDCP entity may retransmit and/or transmit, starting from the first unsuccessfully received data packet of the first PDCP entity, subsequent data packets in ascending order of counts. For example, based on the example shown in FIG. 10, it is assumed that a sequence number in the figure is a count of a data packet, and first information sent by the source network device may be an FMC (namely, 1), the remote terminal device retransmits and/or transmits, based on the first information and starting from a data packet whose count is 1, a subsequent data packet, to avoid packet loss of the data packet.

If the first information is the foregoing case 2, the second PDCP entity may determine, based on the first information, data packets unsuccessfully received by the first PDCP entity, and the first PDCP entity retransmits and/or transmits, starting from the first unsuccessfully received data packet, all unsuccessfully received data packets of the first PDCP entity in ascending order of counts. For example, based on the example shown in FIG. 10, it is assumed that a sequence number in the figure is a count of a data packet. If the source network device further receives a data packet whose count is 4, and data packets indicated by the first information sent by the source network device are data packets whose counts are {1, 2, 3}, the remote terminal device retransmits, based on the first information and starting from the data packet whose count is 1, the data packets whose counts are {1, 2, 3}, and transmits a subsequent data packet starting from a data packet whose count is 5, to avoid packet loss of the data packet, save an uplink air interface resource, and avoid duplicate transmission of a data packet that has been successfully transmitted.

If the first information is the foregoing case 3, the second PDCP entity may determine, based on the successfully received data packet of the first PDCP entity, unsuccessfully received data packets of the first PDCP entity, and retransmit and/or transmit all the unsuccessfully received data packets of the first PDCP entity in ascending order of counts. For example, it is assumed that a sequence number in the figure is a count of a data packet. Based on the example shown in FIG. 10, if the source network device further receives a data packet whose count is 4, and received data packets indicated by the first information sent by the source network device are the data packets whose SNs are {0, 4}, the remote terminal device retransmits, based on the first information and starting from the data packet whose SN is 1, the data packets whose SNs are {1, 2, 3}, and transmits a subsequent data packet starting from the data packet whose SN is 5, to avoid packet loss of the data packet, save an uplink air interface resource, and avoid duplicate transmission of a data packet that has been successfully transmitted.

If the first information is the foregoing case 4, the second PDCP entity may retransmit and/or transmit, starting from an SN or a count next to the SN or the count indicated by the first information, data packets in ascending order of counts. For example, based on the example shown in FIG. 10, it is assumed that a sequence number in the figure is a count of a data packet, and a data packet indicated by the first information sent by the source network device may be a data packet whose count is 0, the remote terminal device retransmits and/or transmits, based on the first information and starting from a data packet whose count is 1, a subsequent data packet, to avoid packet loss of the data packet. It is assumed that the source network device further receives a data packet whose count is 4, and a data packet indicated by the first information sent by the source network device is the data packet whose count is 4, the remote terminal device transmits, based on the first information and starting from a data packet whose count is 5, a subsequent data packet, to reduce packet loss of the data packet.

If the first information is the foregoing case 5, the second PDCP entity may retransmit and/or transmit, starting from the SN or the count indicated by the first information, PDCP SDUs in ascending order of counts. For example, based on the example shown in FIG. 10, if a data packet indicated by the first information sent by the source network device may be a data packet whose count is 1, the remote terminal device retransmits and/or transmits, based on the first information and starting from the data packet whose count is 1, a subsequent data packet, to avoid packet loss of the data packet. It is assumed that the source network device further receives a data packet whose count is 4, and a data packet indicated by the first information sent by the source network device is a data packet whose count is 5, the remote terminal device transmits, based on the first information and starting from the data packet whose count is 5, a subsequent data packet, to reduce packet loss of the data packet.

In the foregoing description, whether a data packet is specifically transmitted or retransmitted depends on whether the data packet has been transmitted before. If the data packet has been transmitted, retransmission is performed. If the data packet has not been transmitted, transmission (namely, new transmission) is performed.

It may be understood that, according to the existing retransmission method, the second PDCP entity needs to perform retransmission starting from the first data packet that is not acknowledged to be successfully received by the bottom layer (for example, the RLC layer). However, it can be learned from the foregoing analysis that, in this manner, if a data packet that is received by the relay terminal device and for which RLC acknowledgement feedback is performed is not sent to the source network device, the data packet is lost. In this application, the receiving status of the first PDCP entity is an actual data packet receiving status of the source network device, and the second PDCP entity determines a retransmitted and/or transmitted data packet based on the receiving status of the first PDCP entity, to avoid or reduce packet loss.

Manner 2: The second PDCP entity is a PDCP entity corresponding to a UM DRB (that is, the first DRB is the UM DRB), and the second PDCP entity determines a data packet (for example, a data packet whose corresponding SN is 1) based on the first information, considers the data packet determined based on the first information as a data packet received from an upper layer, performs a related sending operation without restarting a discard timer, re-associates counts with data packets in ascending order of the counts that have been associated before PDCP re-establishment, and transmits data packets that are obtained by associating the data packets with SNs starting from a count of 0.

If the first information is the foregoing case 1, for example, based on the example shown in FIG. 10, if the first information sent by the source network device may be an FMS (namely, 1), the remote terminal device determines, based on the first information, that all data packets whose SNs are {1, 2, 3, 4, 5, 6, 7} before path switch are transmitted on the second path, considers that these data packets are data packets received from the upper layer, does not start the discard timer, sets a count of a first data packet to 0 according to an ascending order of counts of the data packets before PDCP re-establishment, re-associates SNs with the data packets starting from SN = 0, and transmits data packets that are obtained through re-associating and whose SNs are {0, 1, 2, 3, 4, 5, 6} respectively, to avoid packet loss. For correspondences between SNs of data packets before PDCP re-establishment and SNs of data packets after PDCP re-establishment, refer to Table 1.

**Table 1**

| Data packet | Data packet 1 | Data packet 2 | Data packet 3 | Data packet 4 | Data packet 5 | Data packet 6 | Data packet 7 |
|---|---|---|---|---|---|---|---|
| SN before PDCP re-establishment | 1 | 2 | 3 | 4 | 5 | 6 | 7 |
| SN after PDCP re-establishment | 0 | 1 | 2 | 3 | 4 | 5 | 6 |

If the first information is the foregoing case 2, for example, based on the example shown in FIG. 10, if the source network device further receives the data packet whose SN is 4, and data packets indicated by the first information sent by the source network device are the data packet whose SNs are {1, 2, 3} before path switch, the remote terminal device determines, based on the first information, that all data packets whose SNs are {1, 2, 3, 5, 6, 7} before the path switch are transmitted on the second path, considers that these data packets are data packets received from the upper layer, does not start the discard timer, sets a count of a first data packet to 0 according to an ascending order of counts of the data packets before PDCP re-establishment, re-associates SNs with the data packets starting from SN = 0, and transmits data packets that are obtained through re-associating and whose SNs are {0, 1, 2, 3, 4, 5} respectively, to avoid packet loss. For correspondences between SNs of data packets before PDCP re-establishment and SNs of data packets after PDCP re-establishment, refer to Table 2.

**Table 2**

| Data packet | Data packet 1 | Data packet 2 | Data packet 3 | Data packet 4 | Data packet 5 | Data packet 6 |
|---|---|---|---|---|---|---|
| SN before PDCP re-establishment | 1 | 2 | 3 | 5 | 6 | 7 |
| SN after PDCP re-establishment | 0 | 1 | 2 | 3 | 4 | 5 |

If the first information is the foregoing case 3, for example, based on the example shown in FIG. 10, if the source network device further receives the data packet whose SN is 4, and data packets indicated by the first information sent by the source network device are the data packet whose SNs are {0, 4}, the remote terminal device determines, based on the first information, that all data packets whose SNs are {1, 2, 3, 5, 6, 7} before path switch are transmitted on the second path, considers that these data packets are data packets received from the upper layer, does not start the discard timer, sets a count of a first data packet to 0 according to an ascending order of counts of the data packets before PDCP re-establishment, re-associates SNs with the data packets starting from SN = 0, and transmits data packets that are obtained through re-associating and whose SNs are {0, 1, 2, 3, 4, 5} respectively, to avoid packet loss. For the correspondences between the SNs of the data packets before PDCP re-establishment and the SNs of the data packets after PDCP re-establishment, refer to the foregoing table 2.

If the first information is the foregoing case 4, for example, based on the example shown in FIG. 10, if the source network device further receives the data packet whose SN is 4, and a data packet indicated by the first information sent by the source network device may be the data packet whose SN is 4, the remote terminal device determines, based on the first information, that all data packets whose SNs are {5, 6, 7} before path switch are transmitted on the second path, considers that these data packets are data packets received from the upper layer, does not start the discard timer, sets a count of a first data packet to 0 according to an ascending order of counts of the data packets before PDCP re-establishment, re-associates SNs with the data packets starting from SN = 0, and transmits data packets that are obtained through re-associating and whose SNs are {0, 1, 2} respectively, to avoid or reduce packet loss. For correspondences between SNs of data packets before PDCP re-establishment and SNs of data packets after PDCP re-establishment, refer to Table 3.

**Table 3**

| Data packet | Data packet 1 | Data packet 2 | Data packet 3 |
|---|---|---|---|
| SN before PDCP re-establishment | 5 | 6 | 7 |
| SN after PDCP re-establishment | 0 | 1 | 2 |

If the first information is the foregoing case 5, for example, based on the example shown in FIG. 10, if the source network device further receives the data packet whose SN is 4, and a data packet indicated by the first information sent by the source network device may be the data packet whose SN is 5, the remote terminal device determines, based on the first information, that all data packets whose SNs are {5, 6, 7} before path switch are transmitted on the second path, considers that these data packets are data packets received from the upper layer, does not start the discard timer, sets a count of a first data packet to 0 according to an ascending order of counts of the data packets before PDCP re-establishment, re-associates SNs with the data packets starting from SN = 0, and transmits data packets that are obtained through re-associating and whose SNs are {0, 1, 2} respectively, to avoid or reduce packet loss. For the correspondences between the SNs of the data packets before PDCP re-establishment and the SNs of the data packets after PDCP re-establishment, refer to the foregoing table 3.

For the manner 2, it may be understood that if the second PDCP entity does not perform retransmission according to an existing retransmission method, severe packet loss may be caused. However, in this application, the second PDCP entity can retransmit some or all data packets, to avoid or reduce packet loss.

It should be noted that the first message may include a plurality of pieces of first information. For example, the first message includes two pieces of first information, respectively corresponding to a PDCP receiving status of the first DRB before path switch and a PDCP receiving status of a second DRB before path switch. The second PDCP entity of the remote terminal device may perform data transmission on the second path based on the first information and the information about the DRB corresponding to the first information. For example, the second PDCP entity of the remote terminal device performs data transmission on the second path based on the first information corresponding to the first DRB. A PDCP entity corresponding to the second DRB of the remote terminal device performs data transmission on the second path based on the first information corresponding to the second DRB. Data transmission processes of the two DRBs are independent. In the solution 1, the first message may alternatively be sent by the second network device to the remote terminal device.

According to the method provided in the solution 1, the first information is carried in the switch command, so that the remote terminal device can receive the first information as soon as possible, to avoid or reduce packet loss when data is transmitted on the second path based on the first information.

### Solution 2

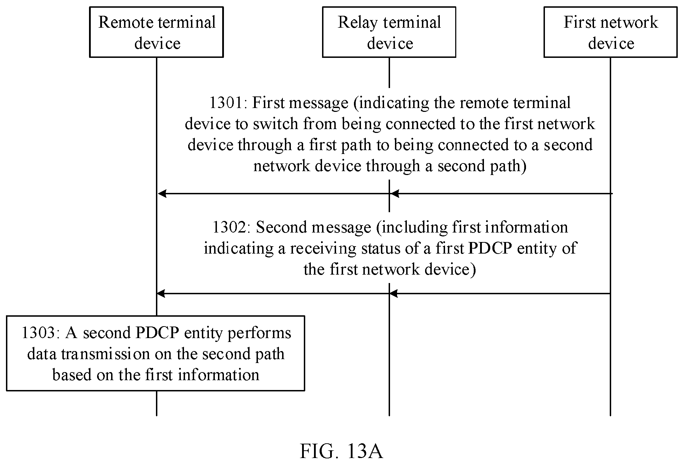

The solution 2 includes two solutions: a solution 2A and a solution 2B. In the solution 2A, as shown in FIG. 13A (an example in which a first path includes one relay terminal device is used for drawing), the data transmission method provided in this application includes the following steps.

1301: A first network device sends a first message to the remote terminal device, where the first message indicates the remote terminal device to switch from being connected to the first network device through the first path to being connected to a second network device through a second path, the first path includes at least one relay terminal device, and the second path includes at least one relay terminal device or does not include a relay terminal device. Correspondingly, the remote terminal device receives the first message sent by the first network device.

In the solution 2A, the first message is a switch command. For example, the first message may be an RRC reconfiguration message. The first network device may send the first message to the remote terminal device through the first path. The first message further includes an indication for data re-establishment or data recovery of an AM DRB.

In the solution 2A, optionally, the first message further includes information about a DRB corresponding to first information, or the first message further includes information indicating a first PDCP entity. For related description of the optional method, refer to the solution 1. Details are not described again.

In the solution 2A, optionally, the second network device and the first network device may be a same network device (for example, the scenarios shown in (a) in FIG. 5 and (b) in FIG. 5), or may be different network devices (for example, the scenarios shown in (c) in FIG. 5 and (d) in FIG. 5).

1302: The first network device sends a second message to the remote terminal device, where the second message includes the first information, and the first information indicates a receiving status of the first PDCP entity of the first network device. Correspondingly, the remote terminal device receives the second message sent by the first network device.

In the solution 2, the receiving status of the first PDCP entity is used for data transmission of a second PDCP entity of the remote terminal device (for example, when the DRB (namely, a first DRB) corresponding to the first information is the AM DRB, the receiving status of the first PDCP entity is used to assist the remote terminal device in performing uplink retransmission). The first information corresponds to a receiving status of the first PDCP entity before path switch of the first DRB. The first PDCP entity is a PDCP entity corresponding to a first DRB on the first network device, and the second PDCP entity is a PDCP entity corresponding to a first DRB on the remote terminal device.

For related description of the first information, refer to the solution 1. Details are not described again.

In the solution 2A, optionally, the second message further includes information about the first DRB, or the second message further includes information indicating the first PDCP entity. The information about the DRB may be an identifier (ID) of the DRB. The information about the first DRB is carried in the second message, so that the remote terminal device can determine a PDCP entity whose receiving status is indicated by the first information. The first DRB may be a UM DRB, or may be an AM DRB. Further, the second message may further include information indicating whether the DRB is the UM DRB or the AM DRB. In this case, the remote terminal device can determine, based on the indication, whether the first DRB is the UM DRB or the AM DRB.

In a possible implementation, the second message is an RRC message, and the RRC message indicates the remote terminal device to release the first path. For example, the second message may be an RRC release (RRC release) message. In this possible implementation, the second message may alternatively be sent by the second network device to the remote terminal device.

In another possible implementation, the second message is a PDCP status report of the AM DRB (in this case, the first DRB is the AM DRB) or a PDCP status report of the UM DRB (in this case, the first DRB is the UM DRB). In this possible implementation, the second message is a PDCP status report of the first DRB. Optionally, the first message and the second message are transmitted by using a same MAC PDU. The first message and the second message are transmitted by using the same MAC PDU, and the remote terminal device may transmit data on the second path based on a PDCP status report in the MAC PDU. This avoids uplink resource waste caused when the remote terminal device performs data transmission on the second path based on an earlier PDCP status report.

1303: The second PDCP entity of the remote terminal device performs data transmission on the second path based on the first information.

For example, when the remote terminal device receives the first information (for example, the PDCP status report), for the AM DRB, the second PDCP entity of the remote terminal device does not perform transmission starting from a first data packet that is not acknowledged to be successfully received by a bottom layer, but transmits, based on a PDCP status report that is received during switch or earlier than the switch command, a data packet that is not acknowledged to be successfully received by the first PDCP entity on the second path. For the UM DRB, the second PDCP entity of the remote terminal device, transmits, based on a PDCP status report that is received during switch or earlier than the switch command, a data packet that is obtained by re-associating a data packet with an SN on the second path.

For a specific implementation of the step 1303, refer to the foregoing step 1202. Details are not described again.

In the solution 2A, optionally, if the second message further includes the information about the DRB corresponding to the first information, the step 1303 may include the following during specific implementation: The second PDCP entity of the remote terminal device performs data transmission on the second path based on the first information and the information about the DRB corresponding to the first information.

In the method provided in the solution 2A, the first message and the second message may be transmitted by using the same MAC PDU, or the first information may be carried in the RRC release message, or implemented by the network device, and the PDCP status report may be sent before switch, so that the remote terminal device can receive the first information as soon as possible, to avoid or reduce packet loss when data is transmitted on the second path based on the first information.

In the solution 2B, the data transmission method is provided, including: A network device may send indication information to the remote terminal device, where the indication information indicates a receiving status of a PDCP entity, for example, indicates a lost data packet or indicates a successfully sent data packet. The indication information is, for example, a PDCP status report (or other PDCP status information). The remote terminal device retransmits the lost data packet to the network device based on the indication information. In other words, the remote terminal device may determine the lost data packet based on the indication information. In other words, the remote terminal device may check the PDCP status report of the network device (or the indication information indicating the lost data packet) to retransmit the lost data packet to the network device. Alternatively, the indication information may be any other information. This is not limited in embodiments of this application.

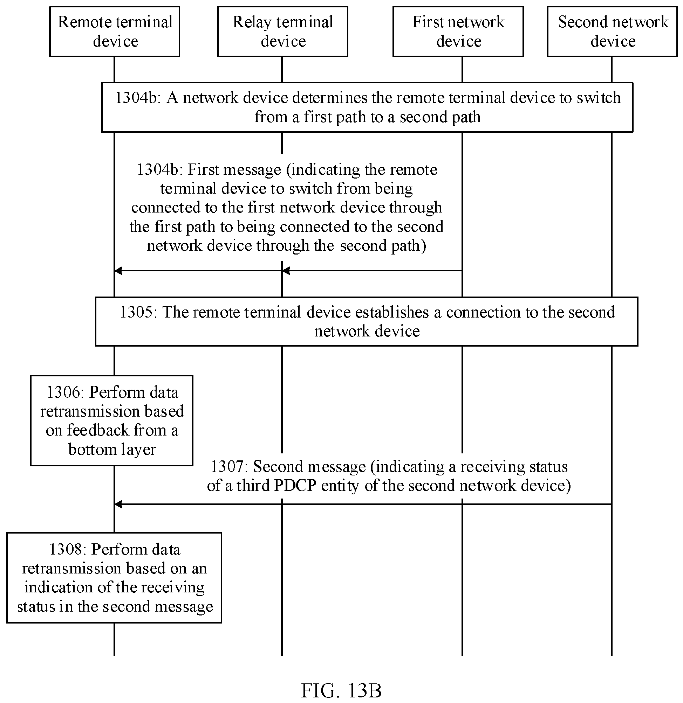

FIG. 13B (an example in which a first path includes one relay terminal device is used for drawing) is a flowchart of the data transmission method in the solution 2B. The method includes the following steps.

1304a: The network device determines the remote terminal device to switch from the first path to a second path. For example, the remote terminal device may report a measurement result to a first network device through the first path, and the first network device determines the remote terminal device to switch from communicating with the first network device through the first path to communicating with a second network device through the second path. The first path includes at least one relay terminal device, and the second path includes at least one relay terminal device or does not include a relay terminal device. The first network device and the second network device may be a same network device, or may be different network devices. This is not limited herein. Optionally, the first path is, for example, to connect to the network device via the relay terminal device, and the second path is, for example, to directly connect to the network device.

1304b: The first network device sends a first message to the remote terminal device, where the first message indicates the remote terminal device to switch from being connected to the first network device through the first path to being connected to the second network device through the second path. Correspondingly, the remote terminal device receives the first message sent by the first network device. For description of this step, refer to 1301. Details are not described herein again.

1305: The remote terminal device establishes a connection to the second network device. The remote terminal device establishes the connection to the second network device through the second path. For example, if there is no relay terminal device between the remote terminal device and the second network device on the second path, the remote terminal device establishes the connection by performing random access to the second network device based on the first message in 1304b.

1306: A second PDCP entity of the remote terminal device performs data transmission on the second path based on acknowledgement feedback from a bottom layer. Specifically, the first message received by the second PDCP entity of the remote terminal device includes an indication for re-establishment or data recovery of an AM DRB. This step applies only to the AM DRB and is optional.

1307: The second network device sends a second message through the second path, where the second message includes first information, and the first information indicates a receiving status of a third PDCP entity of the second network device. Correspondingly, the remote terminal device receives the second message.

Optionally, the second message further includes information about a third DRB, or the second message further includes information indicating the third PDCP entity. The information about the DRB may be an identifier (ID) of the DRB. The information about the third DRB is carried in the second message, so that the remote terminal device can determine a PDCP entity whose receiving status is indicated by the second message. The third DRB may be a UM DRB, or may be an AM DRB. Further, the second message may further include information indicating whether the DRB is the UM DRB or the AM DRB. In this case, the remote terminal device can determine, based on the indication, whether the third DRB is the UM DRB or the AM DRB.

In a possible implementation, the second message is an RRC message, and the RRC message indicates the remote terminal device to release the first path. For example, the second message may be an RRC release (RRC release) message. In this possible implementation, the second message is sent by the second network device to the remote terminal device.

In another possible implementation, the second message is a PDCP status report of the AM DRB (in this case, the third DRB is the AM DRB) or a PDCP status report of the UM DRB (in this case, the third DRB is the UM DRB). In this possible implementation, the second message is a PDCP status report of the third DRB. Optionally, the second network device may send the second message to the remote terminal device immediately after the remote terminal device switches to the second path. The remote terminal device may determine, based on the PDCP status report in the second message, an unsuccessfully transmitted data packet, and perform data transmission on the unsuccessfully transmitted data packet on the second path. A receiving status of the second network device can be more accurately learned, to avoid loss of the data packet. In addition, compared with the solution 2A, this avoids uplink resource waste caused when the remote terminal device performs data transmission on the second path based on an earlier PDCP status report.

In another possible implementation, the second message is a PDCP status report, and is a control control PDU. A format of the PDCP status report in the second message may be the same as that of the PDCP status report in the conventional technology, that is, the PDCP status report includes an FMC and a bitmap, and indicates a receiving status of the PDCP entity. For example, if the PDCP status report received by the remote terminal device is FMC = 10, and a subsequent bitmap is 00110000, it indicates that a first packet that is not correctly received currently is a packet whose count is 10. According to the subsequent bits, it can be determined that a third packet and a fourth packet, namely, packets 13 and 14, after the packet 10 are correctly received, and other packets are not correctly received. The format of the PDCP status report may alternatively be different from that in the conventional technology. This is not limited herein. Optionally, the second message further includes fifth indication information, indicating the sent PDCP status report to trigger data retransmission. For example, a new form of a PDCP status report may be introduced based on a PDU type, to trigger data retransmission. For example, a PDU type of a PDCP control PDU has a 3-bit indication, and may be 011 that is different from 000 in a common PDCP status report. The status report may be used to trigger the remote terminal device to perform data retransmission. For example, the PDCP status report indicates that a first unsuccessfully received packet is a packet 10, and subsequently, packets 13 and 14 are successfully received, and packets 10, 11, 15, and subsequent packets need to be resent.

1308: The remote terminal device retransmits, based on the received receiving status of the PDCP entity, an unsuccessfully received data packet indicated by the receiving status. The receiving status of the PDCP entity may be indicated by using the PDCP status report.

In a possible implementation, when the remote terminal device receives the second message (for example, the PDCP status report), the second PDCP entity of the remote terminal device receives, after the remote terminal device switches from a path (that is, the first path) that indirectly connects to a network, a first PDCP status report of the third PDCP entity, and the remote terminal device transmits, on the second path, a data packet that is not acknowledged to be successfully received by the third PDCP entity. For example, content of the status report received by the third DRB indicates that a first unsuccessfully received packet is a packet 10, and subsequent packets 13 and 14 are successfully received. If the status report is a first status report that is received by the remote terminal device on the third DRB after the remote terminal device switches from the relay terminal device, or a status report received within fixed time (for example, within time T) after path switch, the remote terminal device needs to resend or send data packets that are not acknowledged to be successfully received, namely, packets 10, 11, and 15, and subsequent packets. If the report is a non-first status report that is received by the remote terminal device on the third DRB after the remote terminal device switches from the relay terminal device, or a status report received after fixed time (for example, after time T) after path switch, the remote terminal device needs only to delete the data packet that is acknowledged to be successfully received, and does not trigger retransmission of the data packet. The PDCP status report may be a PDCP status report of an AM DRB or a PDCP status report of a UM DRB. When the UM DRB is used, an FMC of the status report of the UM DRB needs to be a count before switch. For a detailed description of the status report of the UM DRB, refer to the foregoing step 1202. Details are not described again.

In another possible implementation, when the remote terminal device receives the second message (for example, the PDCP status report), the remote terminal device transmits, based on the received PDCP status report of the third PDCP entity that includes the fifth indication information, a data packet that is not acknowledged to be successfully received by the third PDCP entity on the second path. For example, the status report included in the second message is a status report of the third DRB, and content indicates that a first unsuccessfully received packet is a packet 10, and subsequent packets 13 and 14 are successfully received. If a PDU type of the status report indicates not to be 000, for example, 011, after receiving the report, the remote terminal device needs to resend or send data packets that are not acknowledged to be successfully received in the report, namely, packets 10, 11, 15, and subsequent packets. If the PDU type of the status report indicates to be 000, that is, the status report does not include the fifth indication information, the remote terminal device only needs to delete the data packets that are acknowledged to be successfully received, and does not trigger retransmission of the data packet. The second network device sends the status report to the remote terminal device when determining the remote terminal device to switch from a path (namely, the first path) that indirectly connects to a network to the second path. The PDCP status report may be a PDCP status report of an AM DRB or a PDCP status report of a UM DRB. Certainly, in a specific implementation process, the second network device may alternatively send the PDCP status report to the remote terminal device on another occasion. This is not limited in embodiments of this application.

According to the method provided in the solution 2B, the PDCP status report may be sent after switch, to actively trigger the remote terminal device to perform data retransmission, and the remote terminal device may perform data retransmission and transmission on the second path based on an accurate receiving status of the network device, to avoid or reduce packet loss.

In the solution 1 and the solution 2, the network device may determine whether to send the first information based on whether the remote terminal device accesses via the relay terminal device. Alternatively, the remote terminal device may determine, based on whether the switch command or a path switch command is received via the relay terminal device, whether to perform data transmission based on the first information.

### Downlink scenario

In the downlink scenario, loss of the downlink data packet can be avoided or reduced by using the following solution 3 or solution 4.

### Solution 3

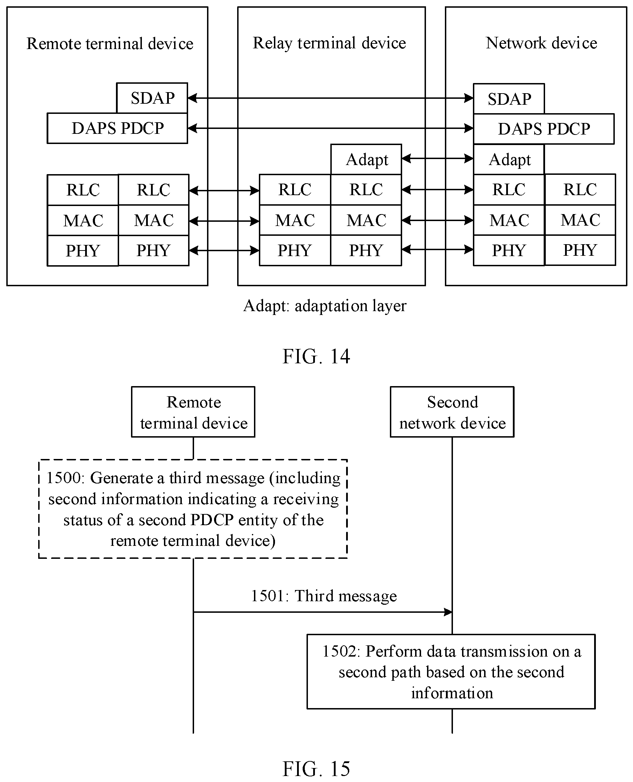

As shown in FIG. 15 (an example in which a second path does not include a relay terminal device is used for drawing), the data transmission method provided in this application includes the following steps.

1501: The remote terminal device sends a third message to a second network device, where the third message indicates that the remote terminal device completes RRC connection configuration, the third message includes second information, and the second information indicates a receiving status of a second PDCP entity of the remote terminal device. Correspondingly, the second network device receives the third message sent by the remote terminal device.

For example, the third message may be an RRC reconfiguration complete message.

Optionally, the third message further includes information about a DRB corresponding to the second information. It should be noted that the third message may include a plurality of pieces of second information. For example, the third message includes two pieces of second information, respectively corresponding to a PDCP receiving status of a first DRB before path switch and a PDCP receiving status of a second DRB before path switch. A first PDCP entity of the network device performs data transmission on the second path based on the second information and the information about the DRB corresponding to the second information. For example, the first PDCP entity of the network device performs data transmission on the second path based on the second information corresponding to the first DRB. The PDCP entity corresponding to the second DRB of the network device performs data transmission on the second path based on the second information corresponding to the second DRB. Data transmission processes of the two DRBs are independent.

In the solution 3, the remote terminal device switches from being connected to a first network device (namely, the source network device) through a first path to being connected to the second network device (namely, the target network device) through the second path. The first path includes at least one relay terminal device, and the second path includes at least one relay terminal device or does not include a relay terminal device. For example, the remote terminal device may perform path switch when receiving a switch command.

In the solution 3, the receiving status of the second PDCP entity of the remote terminal device is used for data transmission of a third PDCP entity of the target network device (for example, when the DRB corresponding to the second information (namely, the first DRB in the foregoing description) is an AM DRB, the receiving status of the second PDCP entity is used to assist the target network device in performing downlink retransmission). The second PDCP entity is a PDCP entity corresponding to the first DRB on the remote terminal device, and the third PDCP entity is a PDCP entity corresponding to the first DRB on the second network device. In the solution 3, optionally, the second network device and the first network device may be a same network device (for example, the scenarios shown in (a) in FIG. 5 and (b) in FIG. 5), or may be different network devices (for example, the scenarios shown in (c) in FIG. 5 and (d) in FIG. 5).

In the solution 3, optionally, the second information may have the following several cases.

Case 6: The second information indicates an SN or a count of a first data packet unsuccessfully received by the second PDCP entity. The case 6 may be understood with reference to the case 1 in the foregoing description. A difference lies only in that this is the second PDCP entity herein.

Case 7: The second information indicates an SN or a count of a data packet unsuccessfully received by the second PDCP entity. The case 7 may be understood with reference to the case 2 in the foregoing description. A difference lies only in that this is the second PDCP entity herein.

Case 8: The second information indicates an SN or a count of a data packet successfully received by the second PDCP entity. The case 8 may be understood with reference to the case 3 in the foregoing description. A difference lies only in that this is the second PDCP entity herein.

Case 9: The second information indicates an SN or a count of a last data packet successfully received by the second PDCP entity. The case 9 may be understood with reference to the case 4 in the foregoing description. A difference lies only in that this is the second PDCP entity herein.

Case 10: The second information indicates a value obtained by adding 1 to a maximum SN or count of a data packet successfully received by the second PDCP entity. The case 10 may be understood with reference to the case 5 in the foregoing description. A difference lies only in that this is the second PDCP entity herein.

It should be noted that the second information is determined based on a data packet receiving status of the second PDCP entity before path switch.

For example, the third message may be an RRC reconfiguration complete message.

Optionally, before the step 1501, the method may further include the following step. 1500: The remote terminal device generates the third message.

1502: The second network device performs data transmission on the second path based on the second information. For example, the second network device performs data retransmission and/or transmission on the first DRB based on the second information.

According to the method provided in the solution 3, the second information is carried in the third message, so that the second network device can receive the second information as soon as possible, to avoid or reduce packet loss when data is transmitted on the second path based on the second information.

### Solution 4

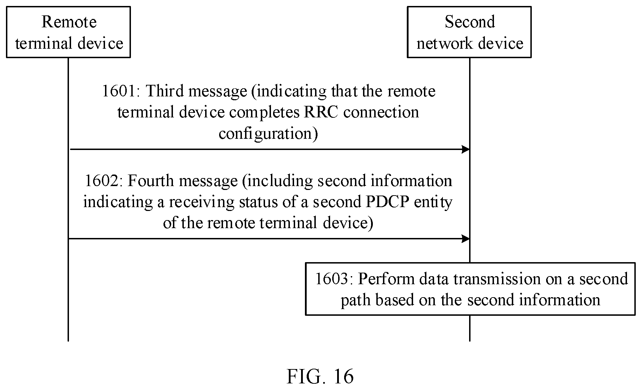

As shown in FIG. 16 (an example in which a second path does not include a relay terminal device is used for drawing), the data transmission method provided in this application includes the following steps.

1601: The remote terminal device sends a third message to a second network device, where the third message indicates that the remote terminal device completes RRC connection configuration. Correspondingly, the second network device receives the third message sent by the remote terminal device. The second network device determines, based on the third message, that the remote terminal device completes RRC connection configuration.

For example, the third message may be an RRC reconfiguration complete message.

In the solution 4, the remote terminal device switches from being connected to a first network device (namely, the source network device) through a first path to being connected to the second network device (namely, the target network device) through the second path. The first path includes at least one relay terminal device, and the second path includes at least one relay terminal device or does not include a relay terminal device. For example, the remote terminal device may perform path switch when receiving a switch command.

In the solution 4, optionally, the second network device and the first network device may be a same network device (for example, the scenarios shown in (a) in FIG. 5 and (b) in FIG. 5), or may be different network devices (for example, the scenarios shown in (c) in FIG. 5 and (d) in FIG. 5).

1602: The remote terminal device sends a fourth message to the second network device, where the fourth message includes second information, and the second information indicates a receiving status of a second PDCP entity of the remote terminal device. Correspondingly, the remote terminal device receives the fourth message sent by the remote terminal device. It should be noted that, when the second information is a PDCP status report (or the fourth message is a PDCP status report), the remote terminal device may pack the fourth message and the third message into a same MAC PDU and send the MAC PDU to the second network device.

In the solution 4, the receiving status of the second PDCP entity of the remote terminal device is used for data transmission of a third PDCP entity of the target network device. For specific description, refer to the solution 3. Details are not described again.

In the solution 4, for related description of the second information, refer to the solution 3. Details are not described again.

1603: The second network device performs data transmission on the second path based on the second information. For example, the second network device performs data retransmission and/or transmission on a first DRB based on the second information.

According to the method provided in the solution 4, the fourth message and the third message are packed in the same MAC PDU and sent to the second network device, so that the second network device can receive the second information as soon as possible, to avoid or reduce packet loss when data is transmitted on the second path based on the second information.

In the solution 3 and the solution 4, the remote terminal device may determine, based on a configuration of the network device or based on whether the remote terminal device switches from a path including the relay terminal device to another path, whether to send the second information.

The solution 1, solution 2, solution 3, and solution 4 in this application are applicable to any one of the following scenarios.

Scenario 1: The first DRB is an AM DRB. After the remote terminal device receives a PDCP re-establishment indication or a PDCP data recovery indication sent by the network device, the remote terminal device stops data transmission with the relay terminal device after PDCP entity re-establishment or PDCP entity data recovery. After sending the PDCP re-establishment indication or the PDCP data recovery indication, the network device also stops sending data to the remote terminal device, and further stops receiving data from the remote terminal device. After receiving the RRC reconfiguration message sent by the network device, the relay terminal device also stops data transmission.

Scenario 2: The first DRB is a UM DRB. After the remote terminal device receives a PDCP re-establishment indication sent by the network device, the remote terminal device stops data transmission with the relay terminal device after PDCP entity re-establishment. After sending the PDCP re-establishment indication, the network device also stops sending data to the remote terminal device, and further stops receiving data from the remote terminal device. After receiving the RRC reconfiguration message sent by the network device, the relay terminal device also stops data transmission.

Scenario 3: The remote terminal device performs DAPS path switch. The remote terminal device may be configured to be both connected to the first network device via the relay terminal device (that is, connected to the first network device through the first path) and directly connected to the second network device (that is, connected to the second network device through the second path, and the second path may also include another relay terminal device). When a path is switched or a DAPS is established, for a downlink, the network device may no longer send new data to the remote terminal device through the first path, but send data to the remote terminal device through the second path. The relay terminal device on the first path continues to send remaining data of the relay terminal device on the first path to the remote terminal device. The network device may alternatively send data on the two paths at the same time, and there is no restriction on data sending. For an uplink, when the remote terminal device receives a path switch indication, the remote terminal device may no longer send new data to the network device through the first path. The relay terminal device on the first path continues to send remaining data of the relay terminal device on the first path to the network device. The remote terminal device may alternatively send data on the two paths at the same time, and there is no restriction on data sending.

Scenario 4: The first DRB is an AM DRB, and after the remote terminal device receives a PDCP re-establishment indication or a PDCP data recovery indication sent by the network device, or the first DRB is a UM DRB, and after the remote terminal device receives a PDCP re-establishment indication sent by the network device, the remote terminal device stops data transmission with the relay terminal device after PDCP entity re-establishment or PDCP entity data recovery. After sending the PDCP re-establishment indication or the PDCP data recovery indication, the network device stops sending data to the remote terminal device, but continues to receive data of the remote terminal device from the relay terminal device. After it is determined that remaining data of the remote terminal device of the relay terminal device is received, a protocol stack on a network device side is released. After receiving the RRC reconfiguration message sent by the network device, the relay terminal device stops data transmission with the remote terminal device, but completes reconfiguration of an adaptation layer after the adaptation layer of the relay terminal device completes transmission of the data of the remote terminal device.

In the foregoing solution, optionally, the first message further includes a PDCP re-establishment indication or a PDCP data recovery indication. In this case, the method may further include: If the first message further includes the PDCP re-establishment indication, the remote terminal device re-establishes the second PDCP entity of the remote terminal device based on the PDCP re-establishment indication. If the first message further includes the PDCP data recovery indication, the remote terminal device recovers data of the second PDCP entity of the remote terminal device based on the PDCP data recovery indication. If the first DRB is the AM DRB, the first message further includes the PDCP re-establishment indication or the PDCP data recovery indication. If the first DRB is the UM DRB, the first message further includes the PDCP re-establishment indication.

In the foregoing solution, optionally, the first message further includes first indication information and/or second indication information. The first indication information indicates to re-establish a first RLC entity, and the second indication information indicates to reset a first MAC entity. In this case, the method may further include: If the first message further includes the first indication information, the remote terminal device re-establishes the first RLC entity based on the first indication information, and/or if the first message further includes the second indication information, the remote terminal device resets the first MAC entity based on the second indication information. Resetting of a MAC entity may also be implicitly indicated, for example, indicated by using a switch command. In this case, after receiving the switch command, the remote terminal device resets the MAC entity. The first indication information and the second indication information may be same indication information, or may be different indication information. This is not limited in this application.

The first RLC entity is an entity corresponding to a PC5 RLC bearer configured for the first DRB before the remote terminal device performs path switch. The first MAC entity is a MAC entity (namely, a PC5 MAC entity) corresponding to a PC5 RLC bearer configured for the first DRB before the remote terminal device performs path switch. The resetting of the first MAC entity may be performed when there is no other PC5-related service. The first RLC entity is re-established, and the first MAC entity is reset, so that the remote terminal device can perform quick configuration when being connected to a new relay terminal device, to reduce occupation of computing resources and reduce terminal energy consumption.

In the foregoing solution, optionally, the first message further includes first configuration information, the first configuration information is used to configure a first RLC bearer and a first association relationship, and the first association relationship is an association relationship between the first RLC bearer and the second PDCP entity of the remote terminal device (in this case, the second PDCP entity is a second PDCP entity obtained through PDCP re-establishment or PDCP data recovery). In this case, the method may further include: The remote terminal device configures the first RLC bearer and the first association relationship based on the first configuration information. The configuring the first association relationship may be, for example, associating an ID of the first DRB with an LCID corresponding to the first RLC bearer.

The first RLC bearer is an RLC bearer configured for the first DRB after the remote terminal device performs path switch. If the second path does not include the relay terminal device, the first RLC bearer is a Uu RLC bearer; or if the second path includes the relay terminal device, the first RLC bearer is a PC5 RLC bearer. Optionally, the first message may further include configuration information used to configure a second MAC entity, and the remote terminal device configures the second MAC entity based on the configuration information (for example, configures a logical channel and a priority of a logical channel). The second MAC entity is a MAC entity corresponding to the first RLC bearer. An objective of configuring the first RLC bearer and the second MAC entity is to enable the remote terminal device to transmit an uplink data packet and/or a downlink data packet through the second path. The first RLC bearer, the first association relationship, and the second MAC entity may be configured based on same configuration information (namely, the first configuration information), or may be separately configured based on different configuration information. If configuration is implemented based on the different configuration information, the configuration information may be sent based on a same message (for example, the first message), or may be sent based on different messages. This is not limited in this application.

In the foregoing solution, optionally, the first network device configures a first relay terminal device. In this case, the method may further include the following steps.

(11) The first network device sends second configuration information to the first relay terminal device, where the second configuration information indicates to re-establish an RLC entity. Correspondingly, the first relay terminal device receives the second configuration information sent by the first network device. The first relay terminal device is a relay terminal device on the first path. Specifically, the first relay terminal device may be one of the at least one relay terminal device on the first path. The RLC entity herein is an RLC entity in an RLC bearer that is configured for the first DRB before the remote terminal device performs path switch and that is used to communicate with a previous hop.

(12) The first relay terminal device re-establishes the RLC entity based on the second configuration information.

In the foregoing solution, optionally, the first network device sends third configuration information to the first relay terminal device, and the third configuration information indicates to reconfigure an adaptation layer. Correspondingly, the first relay terminal device receives the third configuration information sent by the first network device.

In the foregoing solution, for the scenario 1 and the scenario 2, optionally, the method may further include: The first network device sends the second configuration information immediately after sending the switch command. In this case, the first relay terminal device can receive a reconfiguration command as soon as possible, to reduce resource waste and subsequent complex failure determining and processing that are caused because the remote terminal device has stopped receiving but the relay terminal device still keeps sending.

In the foregoing solution, for the scenario 1 and the scenario 2, optionally, the method may further include the following steps.

(21) The first network device sends fourth configuration information to the first relay terminal device, where the fourth configuration information indicates to configure a MAC entity. Correspondingly, the first relay terminal device receives the fourth configuration information sent by the first network device. The first network device may send the fourth configuration information immediately after sending the switch command.

(22) The first relay terminal device configures the MAC entity based on the fourth configuration information.

In the foregoing solution, for the scenario 1 and the scenario 2, optionally, the method further includes the following steps.

(31) The first network device sends third configuration information to the first relay terminal device, where the third configuration information indicates to reconfigure an adaptation layer. Correspondingly, the first relay terminal device receives the third configuration information sent by the first network device.

(32) The first relay terminal device reconfigures the adaptation layer based on the third configuration information.

The process of reconfiguring the adaptation layer of the first relay terminal device includes one or more of the following content: removing an association relationship between a second RLC bearer of the first relay terminal device and an identifier of the remote terminal device, or removing an association relationship between a second RLC bearer of the first relay terminal device and a third RLC bearer of the first relay terminal device.

The identifier of the remote terminal device may be a layer 2 destination identifier (Layer 2 destination ID) of the remote terminal device, an ID of the first DRB, or the like. Both the second RLC bearer and the third RLC bearer of the first relay terminal device are RLC bearers configured for the first DRB. The second RLC bearer is a PC5 RLC bearer and is used to communicate with a previous hop. The third RLC bearer is a PC5 RLC bearer or a Uu RLC bearer, and is used to communicate with a next hop. After the adaptation layer is reconfigured, the adaptation layer of the first relay terminal device no longer associates a data packet delivered by an RLC entity in the second RLC bearer with the identifier of the remote terminal device and/or the ID of the first DRB, and deletes a data packet related to the identifier of the remote terminal device at the adaptation layer.

It should be noted that the adaptation layer may serve a plurality of terminal devices. Therefore, at the adaptation layer, a plurality of DRBs of a plurality of remote terminals may be mapped to one DRB of a relay terminal device. If the remote terminal device performs path switch, information related to the remote terminal device in which the path switch occurs needs to be cleared.

In the foregoing solution, for the scenario 3, the first message further includes a DAPS indication, and the DAPS indication indicates to reconfigure a PDCP to a DAPS. In this case, the method further includes: The remote terminal device performs, based on the DAPS indication, a random access procedure with the target network device when maintaining a connection to the first network device, accesses the target network device by using the random access procedure, and reconfigures the second PDCP entity to a DAPS PDCP. In addition, the first network device may reconfigure the first PDCP entity to the DAPS PDCP, and stop sending a new data packet to the remote terminal device (a retransmitted data packet may further be sent). Optionally, the first network device sends indication information (denoted as third indication information) to the remote terminal device, and the third indication information indicates a last data packet sent via the relay terminal device. The remote terminal device determines, based on the third indication information, when to stop receiving a downlink data packet from the first network device. For example, the third indication information may be carried in an RRC reconfiguration message.

After the DAPS PDCPs are reconfigured by the remote terminal device and the first network device, for a protocol layer architecture of each device, refer to FIG. 14. By using the DAPS PDCP, the remote terminal device may simultaneously communicate with the first network device and the second network device.

In the foregoing solution, for the scenario 4, optionally, the method may further include the following steps.

(41) After totally transmitting data packets delivered by the RLC entity indicated in the foregoing second configuration information (namely, the RLC entity in the second RLC bearer of the first relay terminal device in the foregoing description), the adaptation layer of the first relay terminal device removes a correspondence between the remote terminal device and an air interface RLC bearer (namely, the third RLC bearer of the first relay terminal device in the foregoing description, and in this case, a next hop of the first relay terminal device is the first network device). Optionally, a correspondence between the remote terminal device and the PC5 interface RLC bearer (namely, the second RLC bearer of the first relay terminal device in the foregoing description) is further removed. In other words, if the relay terminal device and the first network device continue to complete uplink data transmission after PDCP re-establishment or PDCP data recovery, the adaptation layer of the first relay terminal device may be reconfigured after complete transmission of the data packet delivered by the RLC entity in the second RLC bearer (for example, after a header is added to the data packet delivered by the RLC entity in the second RLC bearer, and an obtained data packet is delivered to the bottom layer), to prevent loss of an uplink data packet caused by premature reconfiguration of the adaptation layer.

In the foregoing solution, for the foregoing scenario 4, optionally, the method further includes the following steps.

(51) After sending a last data packet of the remote terminal device, the first relay terminal device sends an end marker (end marker) to the first network device, where the end marker indicates that the first relay terminal device completes sending of the data packet forwarded for the remote terminal device. Correspondingly, the first network device receives the end marker sent by the first relay terminal device.

For example, after re-establishing the RLC entity in the PC5 RLC bearer, the first relay terminal device may generate, at the adaptation layer, an end marker (for example, an empty data packet or a specific identifier) corresponding to the identifier of the remote terminal device or the identifier of the first DRB. In this case, the first network device determines, based on the received end marker, that the relay terminal device completes sending of the data packet forwarded for the remote terminal device. The step (51) may also be implemented in another manner. This is not limited in this application.

(52) The first network device performs PDCP re-establishment or PDCP data recovery for the first PDCP entity based on the end marker, and reconfigures the adaptation layer.

In the foregoing solution, for the scenario 1 and the scenario 4, for processing on each protocol layer of each device, refer to Table 4. For the scenario 2, for processing on each protocol layer of each device, refer to Table 5. For the scenario 3, for processing on each protocol layer of each device, refer to Table 6. In Table 4 to Table 6, "-" indicates that the protocol layer does not exist. "No action" indicates that processing on the protocol layer is not involved in this application.

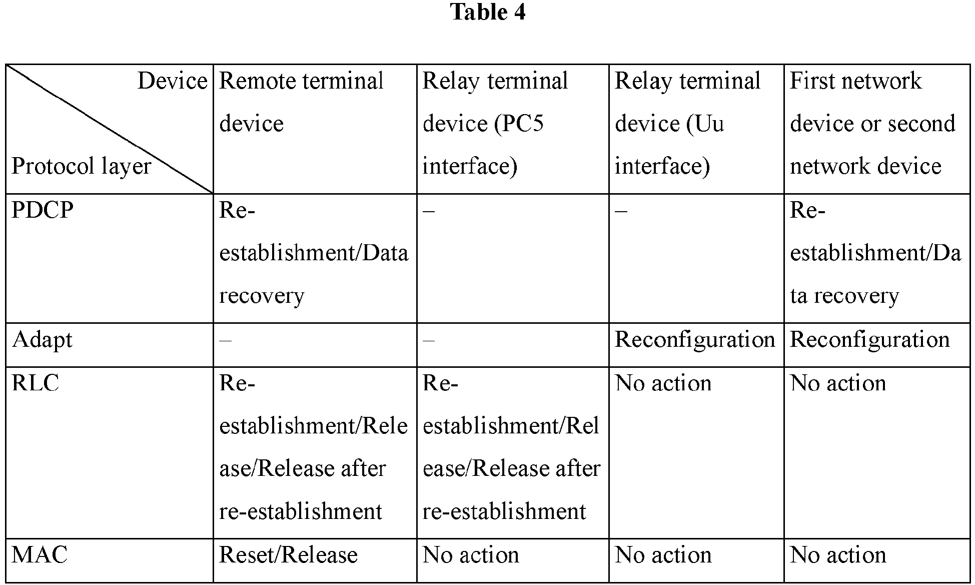

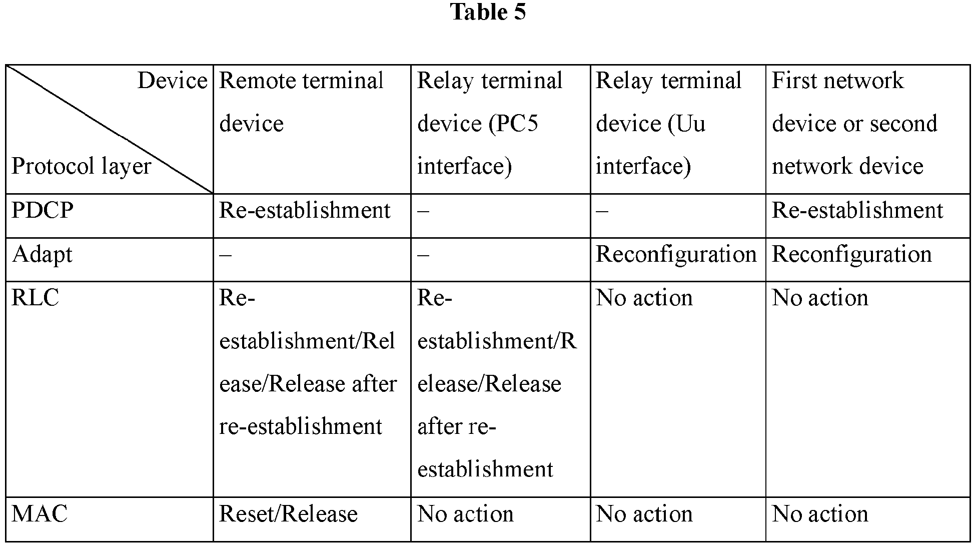

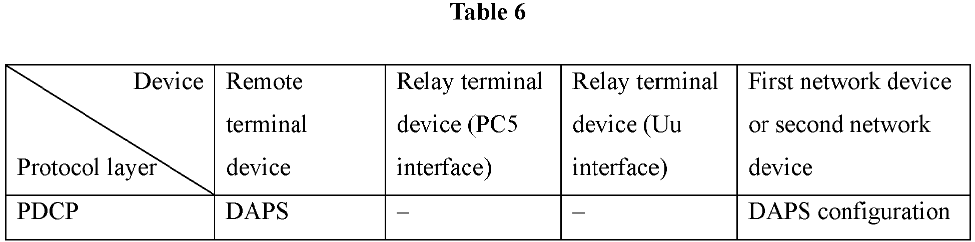

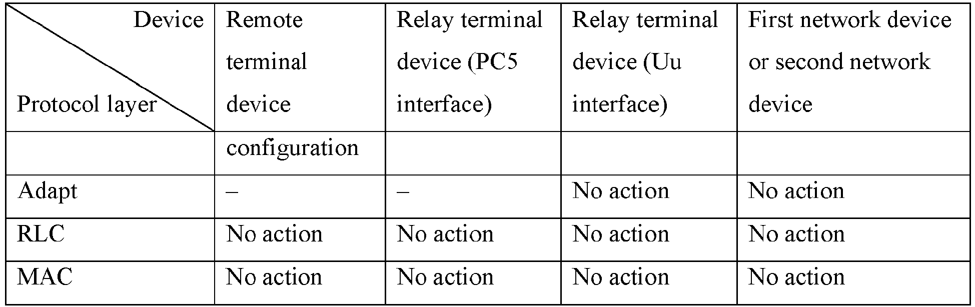

The solutions of the foregoing solution 1, solution 2, solution 3, and solution 4 may be implemented separately or combined (solution 1 + solution 3, solution 1 + solution 4, solution 2 + solution 3, solution 2 + solution 4). All these solutions can be applied to the foregoing scenario 1 (in this case, the second information is determined after the remote terminal device stops data transmission), scenario 2 (in this case, the second information is determined after the remote terminal device stops data transmission), scenario 3 and scenario 4.

When the solution in the uplink scenario is combined with the solution in the downlink scenario, optionally, the first message further includes fourth indication information, and the fourth indication information indicates the remote terminal device to add the second information to a 1^{st} message after performing switch. In this case, after performing the random access procedure with the second network device, the remote terminal device sends the second information to the second network device in the RRC reconfiguration complete message.

In embodiments of this application, an SN or a count of a data packet may alternatively be other information of the data packet, provided that the data packet can be uniquely identified, for example, may be an index of the data packet. Alternatively, receiving statuses indicated by the first information and the second information in this application may not be receiving statuses of the PDCP layer, but receiving statuses of another layer (for example, an RLC layer). This is not limited in this application. In addition, a number of a data packet in this application may alternatively be not an SN or a count, but a number of another sequence. This is not limited in this application.

To make embodiments of this application clearer, the following describes the method provided in the foregoing embodiments by using different scenarios as examples.

Scenario 1: The first DRB is an AM DRB, and the remote terminal device, the relay terminal device, and the network device all stop data transmission after PDCP re-establishment or PDCP data recovery.

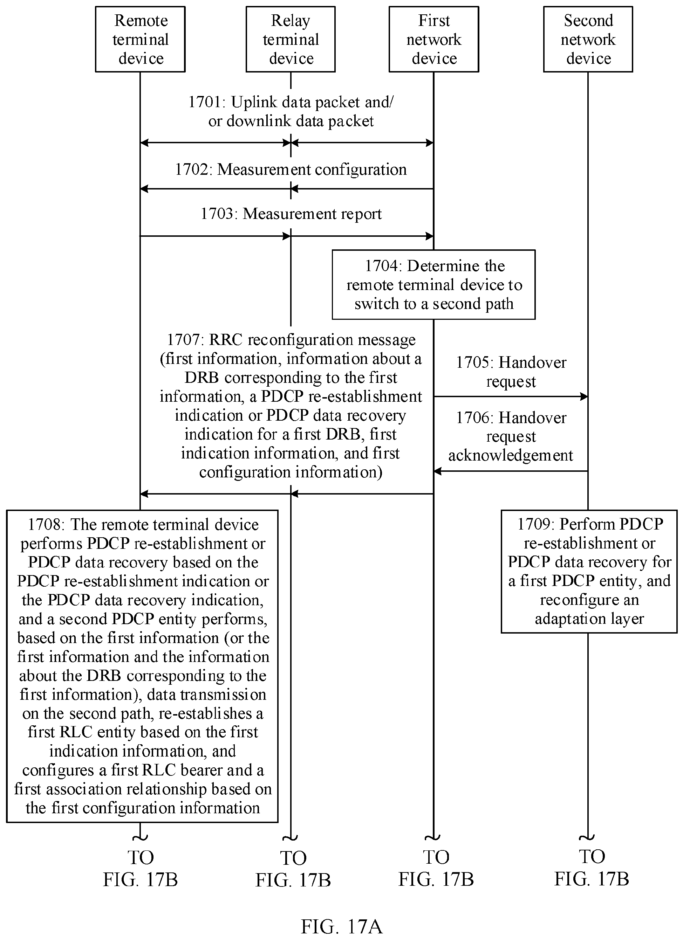

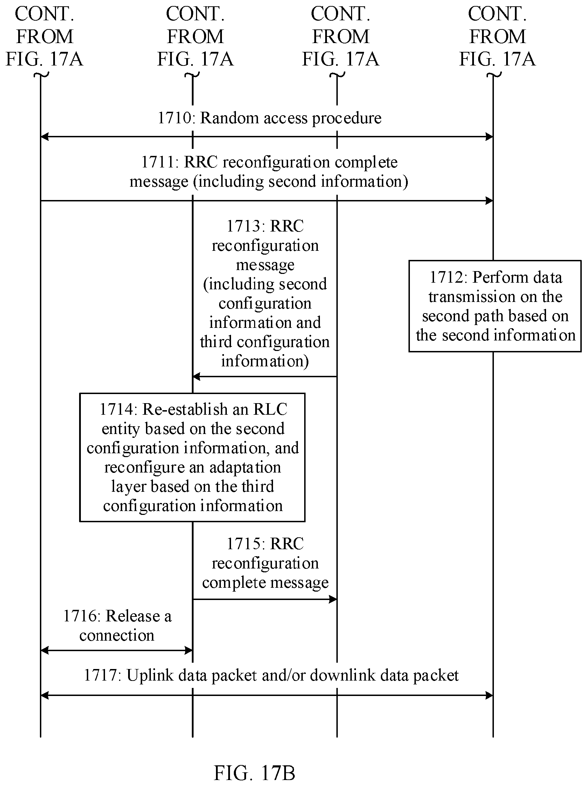

In the scenario 1, as shown in FIG. 17A and FIG. 17B, a procedure of a data transmission method includes the following steps.

1701 to 1706 are respectively the same as 901 to 906.

In a step that is the same as the step in FIG. 9 in FIG. 17A and FIG. 17B, only the path 1 in the step in FIG. 9 needs to be replaced with a first path, the path 2 needs to be replaced with a second path, the source network device needs to be replaced with a first network device, and the target network device needs to be replaced with a second network device for understanding. When the first network device and the second network device are a same network device, 1705 and 1706 do not exist.

1707: The first network device sends an RRC reconfiguration message (namely, the first message in the foregoing description) to the remote terminal device via the relay terminal device. Correspondingly, the remote terminal device receives the RRC reconfiguration message sent by the first network device.

The RRC reconfiguration message indicates the remote terminal device to switch from being connected to the first network device through the first path to being connected to the second network device through the second path. The RRC reconfiguration message includes the first information, the information about the DRB corresponding to the first information, the PDCP re-establishment indication or PDCP data recovery indication for the first DRB, the first indication information, and the first configuration information.

After the step 1707, the first network device stops sending a downlink data packet to the relay terminal device.

1708: The remote terminal device performs PDCP re-establishment or PDCP data recovery based on the PDCP re-establishment indication or the PDCP data recovery indication, and the second PDCP entity performs, based on the first information (or the first information and the information about the DRB corresponding to the first information), data transmission on the second path, re-establishes a first RLC entity based on the first indication information, and configures a first RLC bearer and a first association relationship based on the first configuration information.

During specific implementation of the step 1708, when PDCP re-establishment or PDCP data recovery occurs in the second PDCP entity, the remote terminal device determines a data packet receiving status based on the first information included in the RRC reconfiguration message, and performs retransmission and/or transmission, starting from a first unsuccessfully received data packet instead of a first data packet that is not acknowledged to be successfully received by a bottom layer (for example, an RLC layer), in ascending order of counts.

1709: The first network device performs PDCP re-establishment or PDCP data recovery for a first PDCP entity, and reconfigures an adaptation layer.

The step 1709 is performed after the step 1707, and there is no absolute sequence between the step 1709 and another step.

1710: Same as the step 908.

1711: The remote terminal device sends an RRC reconfiguration complete message (namely, the third message in the foregoing description) to the second network device. Correspondingly, the second network device receives the RRC reconfiguration complete message sent by the remote terminal device, and determines that RRC reconfiguration is completed.

The RRC reconfiguration complete message includes second information.

Optionally, the RRC reconfiguration message further includes fourth indication information, and the fourth indication information indicates the remote terminal device to add the second information to a 1^{st} message after switch. In this case, after receiving the fourth indication information, the remote terminal device may determine an SN of a data packet that is not received by the remote terminal device before PDCP re-establishment, and generate the second information. In the step 1711, the remote terminal device may send, under the indication of the fourth indication information, the second information to the second network device in the RRC reconfiguration complete message, so that the second network device may perform transmission starting from a data packet actually unsuccessfully received by the remote terminal device or from a data packet actually sent by the relay terminal device, to reduce loss of the data packet.

1712: The second network device performs data transmission on the second path based on the second information.

For a specific implementation of the step 1712, refer to the specific implementation of the foregoing step 1502. Details are not described herein again.

1713: The first network device sends an RRC reconfiguration message to the relay terminal device. Correspondingly, the relay terminal device receives the RRC reconfiguration message sent by the first network device.

The RRC reconfiguration message may include second configuration information and third configuration information.

1714: The relay terminal device re-establishes an RLC entity based on the second configuration information, and reconfigures an adaptation layer based on the third configuration information.

1715 to 1717 are respectively the same as 911 to 913.

In another possible implementation, when the first information is an AM DRB PDCP status report, the first information may not be carried in the RRC reconfiguration message, but is packed with the RRC reconfiguration message in a same MAC PDU and sent to the remote terminal device. In this case, in the step 1708, during PDCP re-establishment or PDCP data recovery, the remote terminal device performs retransmission based on a latest AM DRB PDCP status report received before PDCP re-establishment or PDCP data recovery.

In another possible implementation, when the second information is an AM DRB PDCP status report, the second information may not be carried in the RRC reconfiguration complete message, but is packed with the RRC reconfiguration complete message in a same MAC PDU and sent to the second network device. In this case, in the step 1712, the second network device may perform retransmission based on a latest received AM DRB PDCP status report.

According to the method shown in FIG. 17A and FIG. 17B, for the AM DRB, loss of the data packet caused at the relay terminal device can be avoided, to ensure service continuity. Solutions for an uplink data packet and the downlink data packet in the method shown in FIG. 17A and FIG. 17B may also be separately implemented. This is not limited in this application.

Scenario 2: The first DRB is a UM DRB, and the remote terminal device, the relay terminal device, and the network device all stop data transmission after PDCP re-establishment.

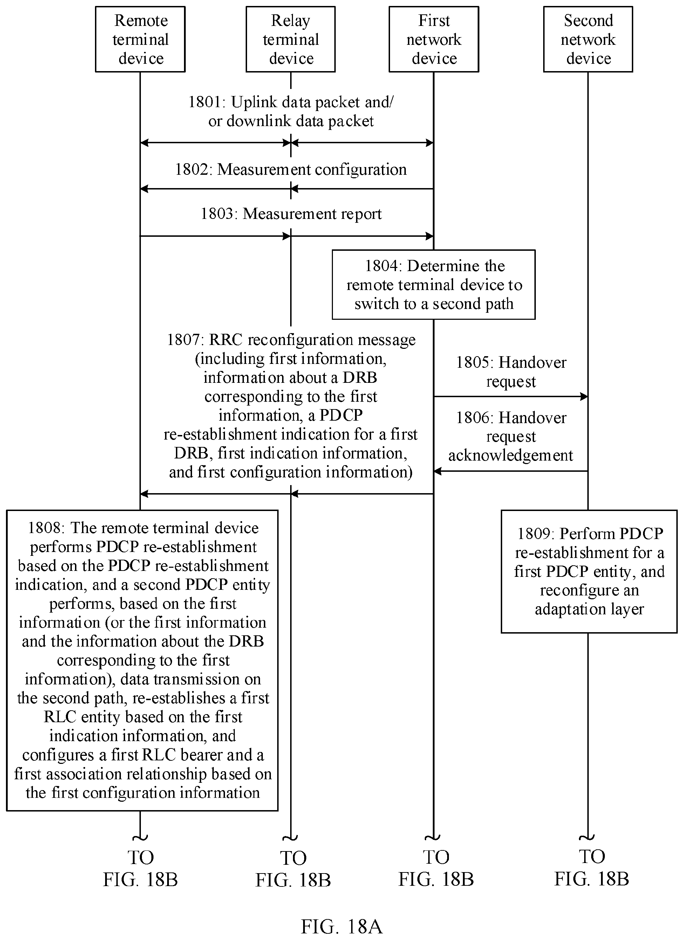

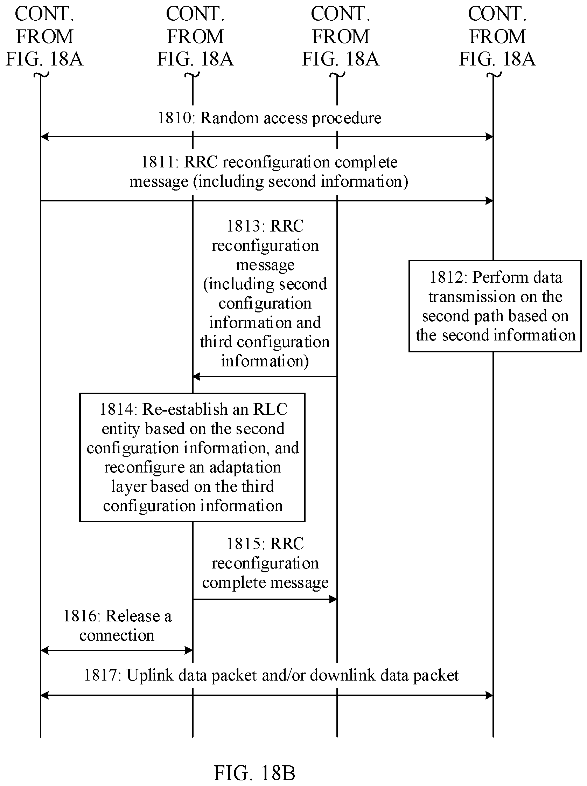

In the scenario 2, as shown in FIG. 18A and FIG. 18B, a procedure of a data transmission method includes the following steps.

1801 to 1806 are respectively the same as 1701 to 1706.

1807: The first network device sends an RRC reconfiguration message (namely, the first message in the foregoing description) to the remote terminal device via the relay terminal device. Correspondingly, the remote terminal device receives the RRC reconfiguration message sent by the first network device.

The RRC reconfiguration message indicates the remote terminal device to switch from being connected to the first network device through a first path to being connected to a second network device through a second path. The RRC reconfiguration message includes the first information, the information about the DRB corresponding to the first information, the PDCP re-establishment indication for the first DRB, the first indication information, and the first configuration information.

After the step 1807, the first network device stops sending a downlink data packet to the relay terminal device.

1808: The remote terminal device performs PDCP re-establishment based on the PDCP re-establishment indication, and the second PDCP entity of the remote terminal device performs, based on the first information (or the first information and the information about the DRB corresponding to the first information), data transmission on the second path, re-establishes a first RLC entity based on the first indication information, and configures a first RLC bearer and a first association relationship based on the first configuration information.

During specific implementation of the step 1808, when PDCP re-establishment occurs in the second PDCP entity, the remote terminal device determines a data packet (for example, a data packet) based on the first information included in the RRC reconfiguration message, considers the data packet determined based on the first information as a data packet received from an upper layer, does not restart a discard timer, and transmits a data packet that is obtained by re-associating the data packet, according to an ascending order of counts that have been associated before PDCP re-establishment, with an SN starting from a count of 0.

1809: The first network device performs PDCP re-establishment for a first PDCP entity, and reconfigures an adaptation layer.

The step 1809 is performed after the step 1807, and there is no absolute sequence between the step 1809 and another step.

1810 to 1817 are respectively the same as 1710 to 1717.

In another possible implementation, when the first information is a UM DRB PDCP status report, the first information may not be carried in the RRC reconfiguration message, but is packed with the RRC reconfiguration message in a same MAC PDU and sent to the remote terminal device. In this case, in the step 1808, during PDCP re-establishment, the remote terminal device performs SN or count association and transmission based on a latest UM DRB PDCP status report received before PDCP re-establishment.

In another possible implementation, when the second information is a UM DRB PDCP status report, the second information may not be carried in the RRC reconfiguration complete message, but is packed with the RRC reconfiguration complete message in a same MAC PDU and sent to the remote terminal device. In this case, in the step 1812, the network device performs SN or count association and transmission based on a latest received UM DRB PDCP status report.

According to the method shown in FIG. 18A and FIG. 18B, for the UM DRB, loss of the data packet caused at the relay terminal device can be avoided, to ensure service continuity. Solutions for an uplink data packet and the downlink data packet in the method shown in FIG. 18A and FIG. 18B may also be separately implemented. This is not limited in this application.

Scenario 3: The remote terminal device performs DAPS path switch.

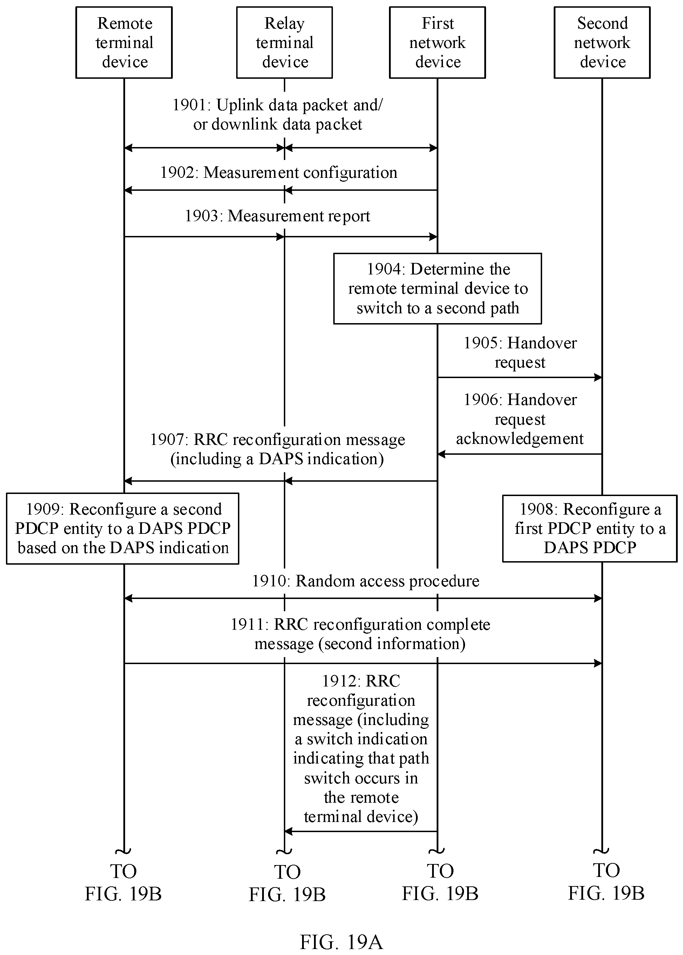

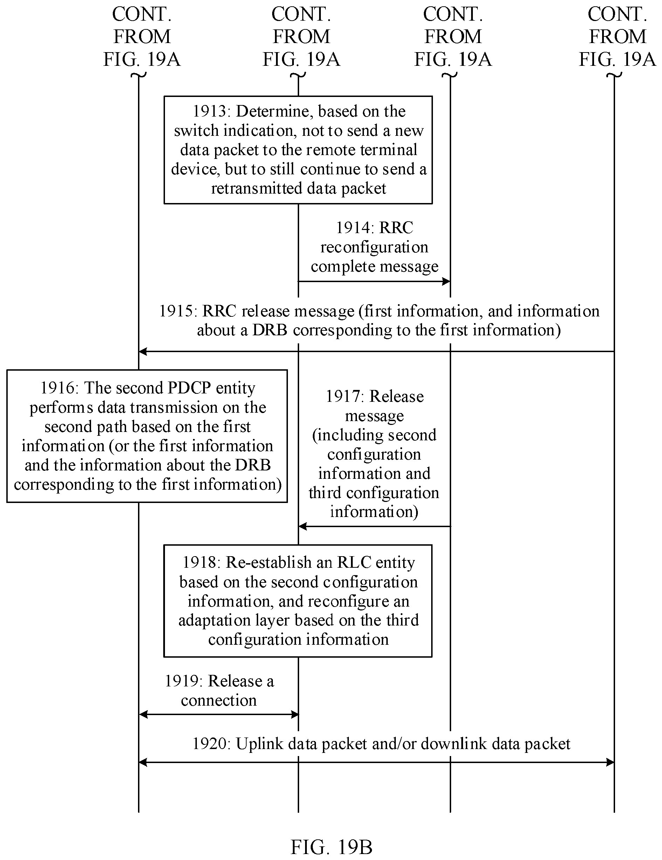

In the scenario 3, when path switch occurs, the remote terminal device maintains dual connections to both the first network device and the relay terminal device. As shown in FIG. 19A and FIG. 19B, the data transmission method provided in this application includes the following steps.

1901 to 1906 are respectively the same as 1701 to 1706.

1907: The first network device sends an RRC reconfiguration message to the remote terminal device via the relay terminal device. Correspondingly, the remote terminal device receives the RRC reconfiguration message sent by the first network device.

The RRC reconfiguration message indicates the remote terminal device to switch from being connected to the first network device through a first path to being connected to a second network device through a second path. The RRC reconfiguration message includes a DAPS indication.

Optionally, the RRC reconfiguration message further includes first configuration information. In this case, the remote terminal device may configure a first RLC bearer and a first association relationship based on the first configuration information.

Optionally, the RRC reconfiguration message further includes third indication information, and the third indication information indicates a last data packet sent via the relay terminal device. The remote terminal device determines, based on the third indication information, when to stop receiving a data packet from the first network device.

1908: The first network device reconfigures a first PDCP entity to a DAPS PDCP.

After the step 1908, the first network device stops sending a new data packet to the remote terminal device, but still continues to send a retransmitted data packet.

1909: The remote terminal device reconfigures a second PDCP entity to a DAPS PDCP based on the DAPS indication.

There is no execution sequence between the step 1908 and the step 1909.

1910 and 1911 are respectively the same as 1710 and 1711.

After the step 1910, the remote terminal device may trigger uplink data switching (uplink data switching).

After the step 1911, optionally, the second network device sends a switch complete message to the first network device, and the switch complete message indicates that the remote terminal device completes switch.

1912: The first network device sends an RRC reconfiguration message to the relay terminal device. Correspondingly, the relay terminal device receives the RRC reconfiguration message sent by the first network device.

The RRC reconfiguration message may include a switch indication, and the switch indication indicates that path switch occurs in the remote terminal device.

1913: The relay terminal device determines, based on the switch indication, not to send a new data packet to the remote terminal device, but to still continue to send a retransmitted data packet.

1914: The relay terminal device sends an RRC reconfiguration complete message to the first network device.

1915: After the remote terminal device accesses the second network device, the second network device sends an RRC release message (namely, the second message in the foregoing description) to the remote terminal device, where the RRC release message indicates the remote terminal device to release the connection to the relay terminal device, that is, release a protocol stack with the relay terminal device on the first path and stop communication on the first path. Correspondingly, the remote terminal device receives the RRC release message sent by the second network device.

The RRC release message includes the first information and the information about the DRB corresponding to the first information.

1916: The second PDCP entity of the remote terminal device performs data transmission on the second path based on the first information (or the first information and the information about the DRB corresponding to the first information).

1917: After determining that the relay terminal device completes sending of an uplink data packet, the first network device sends a release message to the relay terminal device, where the release message indicates the relay terminal device to stop data transmission with the remote terminal device and release a configuration related to the remote terminal device.

The release message may include second configuration information and third configuration information.

1918: The relay terminal device re-establishes an RLC entity based on the second configuration information, and reconfigures an adaptation layer based on the third configuration information.

1919 and 1920 are respectively the same as 1716 and 1717.

In the embodiment shown in FIG. 19A and FIG. 19B, when the remote terminal device maintains the dual connections, the first information may be indicated to the remote terminal device based on the RRC release message. When PDCP entity re-establishment is performed, the first DRB may be an AM DRB or may be a UM DRB. When PDCP entity data recovery is performed, the first DRB may be an AM DRB.

Scenario 4: The first DRB is an AM DRB or a UM DRB, and after PDCP re-establishment or PDCP data recovery (when PDCP entity re-establishment is performed, the first DRB may be an AM DRB or a UM DRB, and when PDCP entity data recovery is performed, the first DRB may be an AM DRB), the remote terminal device stops uplink sending and downlink receiving, the first network device continues uplink receiving, and the relay terminal device continues uplink sending. In other words, after PDCP re-establishment or PDCP data recovery, the relay terminal device and the first network device continue to complete uplink data transmission.

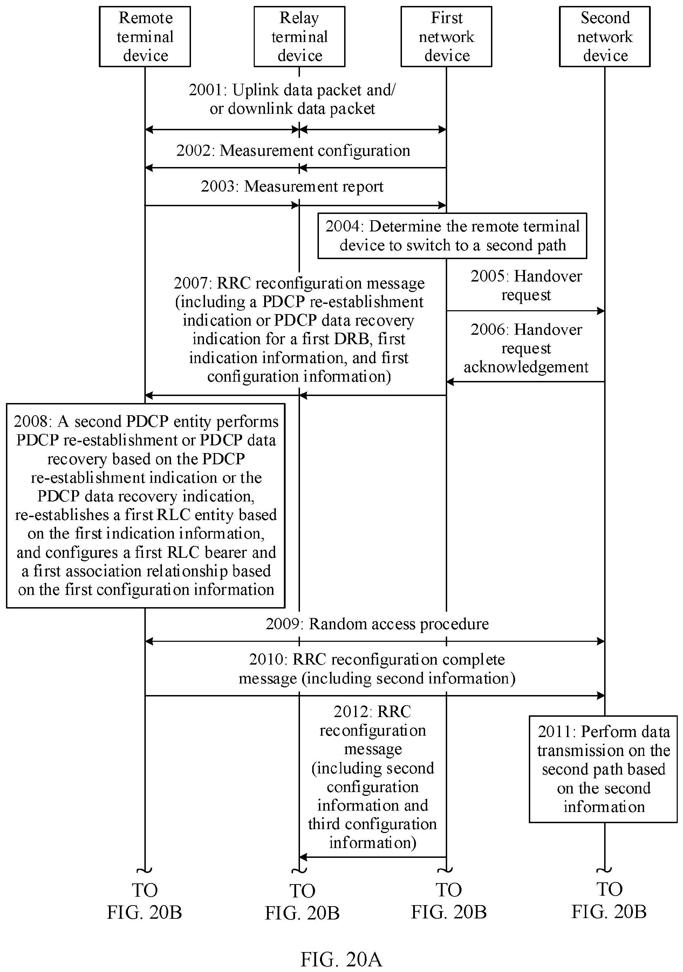

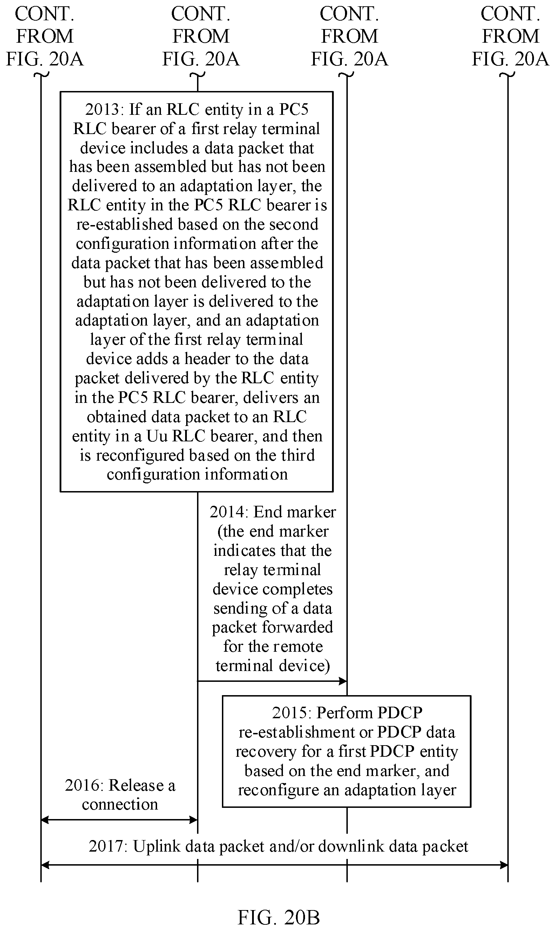

In the scenario 4, when path switch occurs, as shown in FIG. 20A and FIG. 20B, the data transmission method provided in this application includes the following steps.

2001 to 2006 are respectively the same as 1701 to 1706.

2007: The first network device sends an RRC reconfiguration message to the remote terminal device via the relay terminal device. Correspondingly, the remote terminal device receives the RRC reconfiguration message sent by the first network device.

The RRC reconfiguration message indicates the remote terminal device to switch from being connected to the first network device through a first path to being connected to a second network device through a second path. The RRC reconfiguration message includes a PDCP re-establishment indication or PDCP data recovery indication for a first DRB, first indication information, and first configuration information.

After the step 2007, the first network device stops sending a downlink data packet to the relay terminal device.

2008: The second PDCP entity of the remote terminal device performs PDCP re-establishment or PDCP data recovery based on the PDCP re-establishment indication or the PDCP data recovery indication, re-establishes a first RLC entity based on the first indication information, and configures a first RLC bearer and a first association relationship based on the first configuration information.

2009 to 2012 are respectively the same as 1710 to 1713.

2013: If an RLC entity in a PC5 RLC bearer of the relay terminal device includes a data packet that has been assembled but has not been delivered to an adaptation layer, the RLC entity in the PC5 RLC bearer is re-established based on the second configuration information after the data packet that has been assembled but has not been delivered to the adaptation layer is delivered to the adaptation layer, and an adaptation layer of the relay terminal device adds a header to the data packet delivered by the RLC entity in the PC5 RLC bearer, delivers an obtained data packet to an RLC entity in a Uu RLC bearer, and then is reconfigured based on the third configuration information.

Optionally, if the remote terminal device is a last remote terminal device served by the relay terminal device, the relay terminal device may re-establish the RLC entity in the Uu RLC bearer.

2014: After sending a last data packet of the remote terminal device, the relay terminal device sends an end marker to the first network device, where the end marker indicates that the relay terminal device completes sending of the data packet forwarded for the remote terminal device. Correspondingly, the first network device receives the end marker sent by the relay terminal device.

For a specific implementation of the step 2014, refer to the foregoing step (51). Details are not described herein again.

2015: The first network device performs PDCP re-establishment or PDCP data recovery for a first PDCP entity based on the end marker, and reconfigures an adaptation layer.

2016 and 2017 are respectively the same as 1716 and 1717.

According to the method shown in FIG. 20A and FIG. 20B, after receiving the RRC reconfiguration message, the remote terminal device no longer sends a data packet to the relay terminal device, but the relay terminal device continues to send a data packet to the first network device until the relay terminal device sends the last data packet of the remote terminal device. Then, an adaptation layer on a first network device side is reconfigured, a first PDCP entity on the first network device side is re-established, an association relationship of the first PDCP entity at the adaptation layer is removed, and a re-established first PDCP entity is associated with an RLC entity on the second path.

According to the method shown in FIG. 20A and FIG. 20B, because the relay terminal device and the first network device complete transmission of the uplink data packet staying in the relay terminal device, there is no uplink data packet receiving deviation between the remote terminal device and the first network device, and normal data retransmission may be performed. Therefore, the first network device does not need to send the first information to the remote terminal device. In other words, for an uplink data packet, there is no need to change behavior of the second PDCP entity of the remote terminal device, and the first network device may complete configuration through implementation.

The system architecture and service scenario described in embodiments of this application are intended to describe the technical solution in embodiments of this application more clearly, and do not constitute a limitation on the technical solutions provided in embodiments of this application. A person of ordinary skill in the art may learn that the technical solutions provided in embodiments of this application are also applicable to a similar technical problem as a network architecture evolves and a new service scenario emerges.

The foregoing mainly describes the solutions in embodiments of this application from a perspective of a method. It may be understood that, to implement the foregoing functions, each network element, for example, a remote terminal device, a relay terminal device, a first network device, or a second network device, includes at least one of a corresponding hardware structure and a corresponding software module for performing each function. A person skilled in the art should be easily aware that, in combination with units and algorithm steps of the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the remote terminal device, the relay terminal device, the first network device, and the second network device may be divided into functional units based on the foregoing method examples. For example, the functional units may be obtained through division based on corresponding functions, or two or more functions may be integrated into one processing unit. The integrated unit may be implemented in a form of hardware, or may be implemented in a form of a software functional unit. It should be noted that, in this embodiment of this application, division into the units is an example, and is merely a logical function division. During actual implementation, another division manner may be used.

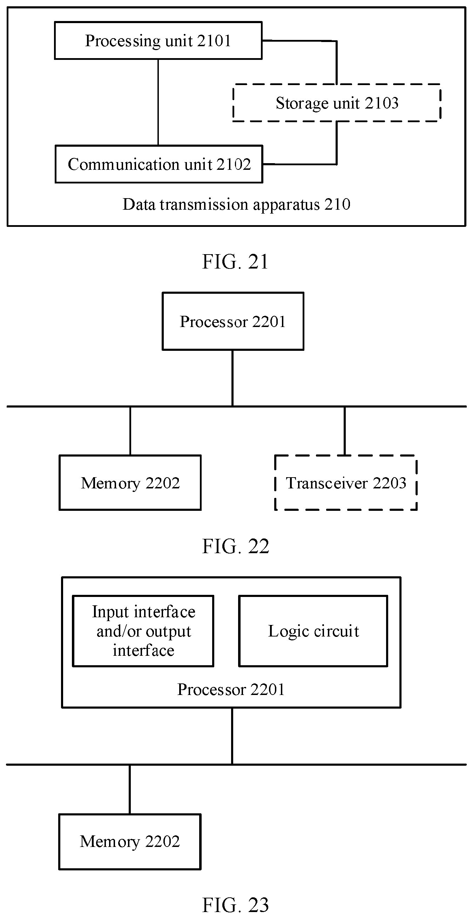

For example, FIG. 21 is a possible schematic diagram of a structure of a data transmission apparatus (denoted as a data transmission apparatus 210) in the foregoing embodiments. The data transmission apparatus 210 includes a processing unit 2101 and a communication unit 2102. Optionally, the apparatus further includes a storage unit 2103. The data transmission apparatus 210 may be configured to show structures of the remote terminal device, the relay terminal device, the first network device, and the second network device in the foregoing embodiments.

When the schematic diagram of a structure shown in FIG. 21 is used to show the structure of the remote terminal device in the foregoing embodiments, the processing unit 2101 is configured to control and manage an action of the remote terminal device. For example, the processing unit 2101 is configured to perform 1201 and 1202 in FIG. 12, 1301 to 1303 in FIG. 13A, 1500 and 1501 in FIG. 15, 1601 and 1602 in FIG. 16, 1701 to 1703, 1707, 1708, 1710, 1711, and 1716 and 1717 in FIG. 17A and FIG. 17B, 1801 to 1803, 1807, 1808, 1810, 1811, and 1816 and 1817 in FIG. 18A and FIG. 18B, 1901 to 1903, 1907, 1909 to 1911, 1915, 1916, and 1919 and 1920 in FIG. 19A and FIG. 19B, 2001 to 2003, 2007, 2008 to 2010, and 2016 and 2017 in FIG. 20A and FIG. 20B, and/or an action performed by the remote terminal device in another process described in embodiments of this application. The processing unit 2101 may communicate with another network entity via the communication unit 2102, for example, communicate with the relay terminal device in FIG. 12. The storage unit 2103 is configured to store program code and data of the remote terminal device.

When the schematic diagram of a structure shown in FIG. 21 is used to show the structure of the relay terminal device in the foregoing embodiments, the processing unit 2101 is configured to control and manage an action of the relay terminal device. For example, the processing unit 2101 is configured to perform 1201 in FIG. 12, 1301 and 1302 in FIG. 13A, 1701 to 1703, 1707, and 1713 to 1716 in FIG. 17A and FIG. 17B, 1801 to 1803, 1807, and 1813 to 1816 in FIG. 18A and FIG. 18B, 1901 to 1903, 1907, 1912 to 1914, and 1917 to 1919 in FIG. 19A and FIG. 19B, 2001 to 2003, 2007, 2012 to 2014, and 2016 in FIG. 20A and FIG. 20B, and/or an action performed by the relay terminal device in another process described in embodiments of this application. The processing unit 2101 may communicate with another network entity via the communication unit 2102, for example, communicate with the remote terminal device in FIG. 12. The storage unit 2103 is configured to store program code and data of the relay terminal device.

When the schematic diagram of a structure shown in FIG. 21 is used to show the structure of the first network device in the foregoing embodiments, the processing unit 2101 is configured to control and manage an action of the first network device. For example, the processing unit 2101 is configured to perform 1200 and 1201 in FIG. 12, 1301 and 1302 in FIG. 13A, 1701 to 1707, 1713, and 1715 in FIG. 17A and FIG. 17B, 1801 to 1807, 1813, and 1815 in FIG. 18A and FIG. 18B, 1901 to 1907, 1912, 1914, and 1917 in FIG. 19A and FIG. 19B, 2001 to 2007, 2012, 2014, and 2015 in FIG. 20A and FIG. 20B, and/or an action performed by the first network device in another process described in embodiments of this application. The processing unit 2101 may communicate with another network entity via the communication unit 2102, for example, communicate with the relay terminal device in FIG. 12. The storage unit 2103 is configured to store program code and data of the first network device.

When the schematic diagram of a structure shown in FIG. 21 is used to show the structure of the second network device in the foregoing embodiments, the processing unit 2101 is configured to control and manage an action of the second network device. For example, the processing unit 2101 is configured to perform 1501 and 1502 in FIG. 15, 1601 to 1603 in FIG. 16, 1705, 1706, 1709 to 1712, and 1717 in FIG. 17A and FIG. 17B, 1805, 1806, 1809 to 1812, and 1817 in FIG. 18A and FIG. 18B, 1905, 1906, 1908, 1910, 1911, 1915, and 1920 in FIG. 19A and FIG. 19B, 2005, 2006, 2009 to 2011, and 2017 in FIG. 20A and FIG. 20B, and/or an action performed by the second network device in another process described in embodiments of this application. The processing unit 2101 may communicate with another network entity via the communication unit 2102, for example, communicate with the relay terminal device in FIG. 13A and FIG. 13B. The storage unit 2103 is configured to store program code and data of the second network device.

For example, the data transmission apparatus 210 may be a device, or may be a chip or a chip system.

When the data transmission apparatus 210 is a device, the processing unit 2101 may be a processor, and the communication unit 2102 may be a communication interface, a transceiver, or an input interface and/or an output interface. Optionally, the transceiver may be a transceiver circuit. Optionally, the input interface may be an input circuit, and the output interface may be an output circuit.

When the data transmission apparatus 210 is a chip or a chip system, the communication unit 2102 may be a communication interface, an input interface and/or an output interface, an interface circuit, an output circuit, an input circuit, a pin, a related circuit, or the like on the chip or the chip system. The processing unit 2101 may be a processor, a processing circuit, a logic circuit, or the like.

When the integrated unit in FIG. 21 is implemented in a form of a software functional module and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium, and includes a plurality of instructions for instructing a computer device (which may be, for example, a personal computer, a server, or a network device) or a processor (processor) to perform all or some of the steps of the methods described in embodiments of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

An embodiment of this application further provides a schematic diagram of a hardware structure of a data transmission apparatus. Refer to FIG. 22 or FIG. 23. The data transmission apparatus includes a processor 2201, and optionally, further includes a memory 2202 connected to the processor 2201.

The processor 2201 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 2201 may alternatively include a plurality of CPUs, and the processor 2201 may be a single-core (single-CPU) processor or a multicore (multi-CPU) processor. The processor herein may be one or more devices, circuits, or processing cores configured to process data (for example, computer program instructions).

The memory 2202 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. This is not limited in embodiments of this application. The memory 2202 may exist independently (in this case, the memory 2202 may be located outside the data transmission apparatus, or may be located in the data transmission apparatus), or may be integrated with the processor 2201. The memory 2202 may include computer program code. The processor 2201 is configured to execute the computer program code stored in the memory 2202, to implement the methods provided in embodiments of this application.

In a first possible implementation, refer to FIG. 22. The data transmission apparatus further includes a transceiver 2203. The processor 2201, the memory 2202, and the transceiver 2203 are connected through a bus. The transceiver 2203 is configured to communicate with another device or a communication network. Optionally, the transceiver 2203 may include a transmitter and a receiver. A component configured to implement a receiving function in the transceiver 2203 may be considered as a receiver machine. The receiver machine is configured to perform a receiving step in embodiments of this application. A component configured to implement a sending function in the transceiver 2203 may be considered as a transmitter machine. The transmitter machine is configured to perform a sending step in embodiments of this application.

Based on the first possible implementation, the schematic diagram of a structure shown in FIG. 22 may be used to show structures of the remote terminal device, the relay terminal device, the first network device, and the second network device in the foregoing embodiments.

When the schematic diagram of a structure shown in FIG. 22 is used to show the structure of the remote terminal device in the foregoing embodiments, the processor 2201 is configured to control and manage an action of the remote terminal device. For example, the processor 2201 is configured to perform 1201 and 1202 in FIG. 12, 1301 to 1303 in FIG. 13A, 1500 and 1501 in FIG. 15, 1601 and 1602 in FIG. 16, 1701 to 1703, 1707, 1708, 1710, 1711, and 1716 and 1717 in FIG. 17A and FIG. 17B, 1801 to 1803, 1807, 1808, 1810, 1811, and 1816 and 1817 in FIG. 18A and FIG. 18B, 1901 to 1903, 1907, 1909 to 1911, 1915, 1916, and 1919 and 1920 in FIG. 19A and FIG. 19B, 2001 to 2003, 2007, 2008 to 2010, and 2016 and 2017 in FIG. 20A and FIG. 20B, and/or an action performed by the remote terminal device in another process described in embodiments of this application. The processor 2201 may communicate with another network entity via the transceiver 2203, for example, communicate with the relay terminal device in FIG. 12. The memory 2202 is configured to store program code and data of the remote terminal device.

When the schematic diagram of a structure shown in FIG. 22 is used to show the structure of the relay terminal device in the foregoing embodiments, the processor 2201 is configured to control and manage an action of the relay terminal device. For example, the processor 2201 is configured to perform 1201 in FIG. 12, 1301 and 1302 in FIG. 13A, 1701 to 1703, 1707, and 1713 to 1716 in FIG. 17A and FIG. 17B, 1801 to 1803, 1807, and 1813 to 1816 in FIG. 18A and FIG. 18B, 1901 to 1903, 1907, 1912 to 1914, and 1917 to 1919 in FIG. 19A and FIG. 19B, 2001 to 2003, 2007, 2012 to 2014, and 2016 in FIG. 20A and FIG. 20B, and/or an action performed by the relay terminal device in another process described in embodiments of this application. The processor 2201 may communicate with another network entity via the transceiver 2203, for example, communicate with the remote terminal device in FIG. 12. The memory 2202 is configured to store program code and data of the relay terminal device.

When the schematic diagram of a structure shown in FIG. 22 is used to show the structure of the first network device in the foregoing embodiments, the processor 2201 is configured to control and manage an action of the first network device. For example, the processor 2201 is configured to perform 1200 and 1201 in FIG. 12, 1301 and 1302 in FIG. 13A, 1701 to 1707, 1713, and 1715 in FIG. 17A and FIG. 17B, 1801 to 1807, 1813, and 1815 in FIG. 18A and FIG. 18B, 1901 to 1907, 1912, 1914, and 1917 in FIG. 19A and FIG. 19B, 2001 to 2007, 2012, 2014, and 2015 in FIG. 20A and FIG. 20B, and/or an action performed by the first network device in another process described in embodiments of this application. The processor 2201 may communicate with another network entity via the transceiver 2203, for example, communicate with the relay terminal device in FIG. 12. The memory 2202 is configured to store program code and data of the first network device.

When the schematic diagram of a structure shown in FIG. 22 is used to show the structure of the second network device in the foregoing embodiments, the processor 2201 is configured to control and manage an action of the second network device. For example, the processor 2201 is configured to perform 1501 and 1502 in FIG. 15, 1601 to 1603 in FIG. 16, 1705, 1706, 1709 to 1712, and 1717 in FIG. 17A and FIG. 17B, 1805, 1806, 1809 to 1812, and 1817 in FIG. 18A and FIG. 18B, 1905, 1906, 1908, 1910, 1911, 1915, and 1920 in FIG. 19A and FIG. 19B, 2005, 2006, 2009 to 2011, and 2017 in FIG. 20A and FIG. 20B, and/or an action performed by the second network device in another process described in embodiments of this application. The processor 2201 may communicate with another network entity via the transceiver 2203, for example, communicate with the relay terminal device in FIG. 13A and FIG. 13B. The memory 2202 is configured to store program code and data of the second network device.

In a second possible implementation, the processor 2201 includes a logic circuit and an input interface and/or an output interface. For example, the output interface is configured to perform a sending action in a corresponding method, and the input interface is configured to perform a receiving action in a corresponding method.

Based on the second possible implementation, refer to FIG. 23. The schematic diagram of a structure shown in FIG. 23 may be used to show structures of the remote terminal device, the relay terminal device, the first network device, and the second network device in the foregoing embodiments.

When the schematic diagram of a structure shown in FIG. 23 is used to show the structure of the remote terminal device in the foregoing embodiments, the processor 2201 is configured to control and manage an action of the remote terminal device. For example, the processor 2201 is configured to perform 1201 and 1202 in FIG. 12, 1301 to 1303 in FIG. 13A, 1500 and 1501 in FIG. 15, 1601 and 1602 in FIG. 16, 1701 to 1703, 1707, 1708, 1710, 1711, and 1716 and 1717 in FIG. 17A and FIG. 17B, 1801 to 1803, 1807, 1808, 1810, 1811, and 1816 and 1817 in FIG. 18A and FIG. 18B, 1901 to 1903, 1907, 1909 to 1911, 1915, 1916, and 1919 and 1920 in FIG. 19A and FIG. 19B, 2001 to 2003, 2007, 2008 to 2010, and 2016 and 2017 in FIG. 20A and FIG. 20B, and/or an action performed by the remote terminal device in another process described in embodiments of this application. The processor 2201 may communicate with another network entity via the input interface and/or the output interface, for example, communicate with the relay terminal device in FIG. 12. The memory 2202 is configured to store program code and data of the remote terminal device.

When the schematic diagram of a structure shown in FIG. 23 is used to show the structure of the relay terminal device in the foregoing embodiments, the processor 2201 is configured to control and manage an action of the relay terminal device. For example, the processor 2201 is configured to perform 1201 in FIG. 12, 1301 and 1302 in FIG. 13A, 1701 to 1703, 1707, and 1713 to 1716 in FIG. 17A and FIG. 17B, 1801 to 1803, 1807, and 1813 to 1816 in FIG. 18A and FIG. 18B, 1901 to 1903, 1907, 1912 to 1914, and 1917 to 1919 in FIG. 19A and FIG. 19B, 2001 to 2003, 2007, 2012 to 2014, and 2016 in FIG. 20A and FIG. 20B, and/or an action performed by the relay terminal device in another process described in embodiments of this application. The processor 2201 may communicate with another network entity via the input interface and/or the output interface, for example, communicate with the remote terminal device in FIG. 12. The memory 2202 is configured to store program code and data of the relay terminal device.

When the schematic diagram of a structure shown in FIG. 23 is used to show the structure of the first network device in the foregoing embodiments, the processor 2201 is configured to control and manage an action of the first network device. For example, the processor 2201 is configured to perform 1200 and 1201 in FIG. 12, 1301 and 1302 in FIG. 13A, 1701 to 1707, 1713, and 1715 in FIG. 17A and FIG. 17B, 1801 to 1807, 1813, and 1815 in FIG. 18A and FIG. 18B, 1901 to 1907, 1912, 1914, and 1917 in FIG. 19A and FIG. 19B, 2001 to 2007, 2012, 2014, and 2015 in FIG. 20A and FIG. 20B, and/or an action performed by the first network device in another process described in embodiments of this application. The processor 2201 may communicate with another network entity via the input interface and/or the output interface, for example, communicate with the relay terminal device in FIG. 12. The memory 2202 is configured to store program code and data of the first network device.

When the schematic diagram of a structure shown in FIG. 23 is used to show the structure of the second network device in the foregoing embodiments, the processor 2201 is configured to control and manage an action of the second network device. For example, the processor 2201 is configured to perform 1501 and 1502 in FIG. 15, 1601 to 1603 in FIG. 16, 1705, 1706, 1709 to 1712, and 1717 in FIG. 17A and FIG. 17B, 1805, 1806, 1809 to 1812, and 1817 in FIG. 18A and FIG. 18B, 1905, 1906, 1908, 1910, 1911, 1915, and 1920 in FIG. 19A and FIG. 19B, 2005, 2006, 2009 to 2011, and 2017 in FIG. 20A and FIG. 20B, and/or an action performed by the second network device in another process described in embodiments of this application. The processor 2201 may communicate with another network entity via the input interface and/or the output interface, for example, communicate with the relay terminal device in FIG. 13A and FIG. 13B. The memory 2202 is configured to store program code and data of the second network device.

In an implementation process, the steps of the methods in embodiments can be implemented by using a hardware integrated logical circuit in the processor, or by using instructions in a form of software. The steps of the methods disclosed with reference to embodiments of this application may be directly performed and accomplished by a hardware processor, or may be performed and accomplished by using a combination of hardware and a software module in the processor.

An embodiment of this application further provides a computer-readable storage medium, including instructions. When the instructions are run on a computer, the computer is enabled to perform any one of the foregoing methods.

An embodiment of this application further provides a computer program product including instructions. When the instructions are run on a computer, the computer is enabled to perform any one of the foregoing methods.

An embodiment of this application further provides a communication system, including one or more of the following devices: the foregoing remote terminal device, the foregoing relay terminal device, the foregoing first network device, and the foregoing second network device.

An embodiment of this application further provides a chip, including a processor and an interface. The processor is coupled to a memory through the interface. When the processor executes a computer program or instructions in the memory, any one of the methods provided in the foregoing embodiments is performed.

An embodiment of this application further provides a data transmission apparatus, including a processor and an interface. The processor is coupled to a memory through the interface. When the processor executes a computer program or instructions in the memory, any one of the methods provided in the foregoing embodiments is performed.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to specific features and embodiments thereof, it is clear that various modifications and combinations may be made to them without departing from the scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. In this way, this application is intended to cover these modifications and variations of this application provided that they fall within the scope of the claims of this application

An embodiment of this application further provides a data lossless solution. This solution may be used in combination with the foregoing embodiments.

A simple solution to this issue is that a relay terminal device (for example, relay UE) continues to transmit data buffered at the relay terminal device. In other words, the relay terminal device maintains a Uu configuration of a remote terminal device (for example, remote UE), and continues to transmit data to a network device. The network device is, for example, an access network device (for example, a base station that may be a gNB), to obtain UL buffered data. Similarly, for a downlink, the relay terminal device maintains a PC5 configuration of the remote terminal device, and continues to transmit downlink buffered data to the remote terminal device. Before all buffered data of the remote terminal device is transmitted, the configuration of the remote terminal device on the relay terminal device is released.

During indirect-to-direct path switch of the remote terminal device, a rare case is a Uu RLF failure between the relay terminal device and the network device, and the foregoing solution may not work. Another enhancement is to initiate PDCP retransmission by the remote terminal device. For example, in an uplink, the remote terminal device may retransmit a lost data packet to the network device by receiving and checking a PDCP status report of the network device. However, when and how to transmit the PDCP status report is an issue.

Observation 1: If a Uu RLF of the relay terminal device occurs during the indirect-to-direct path switch of the remote terminal device, some data may be lost based on conventional PDCP behavior.

A similar issue exists when the remote UE performs RRC re-establishment due to inter-gNB switch of the relay UE. If the relay UE switches to another gNB, buffered data of the remote UE at the relay UE is lost.

Observation 2: If the remote terminal device performs RRC re-establishment due to switch between network devices of the relay terminal device, some data may be lost based on conventional PDCP behavior.

The foregoing two data loss issues exist, but there may be a few cases. RAN 2 may use the conventional PDCP behavior as a baseline for lossless service continuity, and if available, discusses necessity of PDCP retransmission by the remote terminal device based on a PDCP status report as an enhancement.

Observation 3: The issue in the Observation 1/2 can be seen as a corner case.

Proposal 13: Conventional PDCP behavior is the baseline for lossless service continuity. RAN 2 discusses necessity of the PDCP retransmission by the remote terminal device based on the PDCP status report as the enhancement.

## Claims

1. A data transmission method, applied to a first network device, wherein the method comprises:
sending (1304b) a first message to a remote terminal device, wherein the first message indicates the remote terminal device to switch from being connected to the first network device through a first path to being connected to a second network device through a second path,
wherein the second network device and the first network device are different network devices,
**characterized in that** the first message comprises first information, the first information indicates a receiving status of a first packet data convergence protocol, PDCP entity of the first network device, the receiving status of the first PDCP entity is an actual data packet receiving status of the first network device, the first path comprises at least one relay terminal device, and the second path comprises at least one relay terminal device or does not comprise a relay terminal device.

2. The method according to claim 1, wherein the receiving status of the first PDCP entity is used for data transmission of a second PDCP entity of the remote terminal device.

3. The method according to claim 1 or 2, wherein
the first information indicates a sequence number or a count of a first data packet unsuccessfully received by the first PDCP entity;
the first information indicates a sequence number or a count of a data packet unsuccessfully received by the first PDCP entity;
the first information indicates a sequence number or a count of a data packet successfully received by the first PDCP entity;
the first information indicates a sequence number or a count of a last data packet successfully received by the first PDCP entity; or
the first information indicates a value obtained by adding 1 to a maximum sequence number or count of a data packet successfully received by the first PDCP entity.

4. The method according to any one of claims 1 to 3, wherein the first message further comprises information about a data radio bearer corresponding to the first information, or the first message further comprises information indicating the first PDCP entity.

5. The method according to any one of claims 1 to 4, wherein the first message further comprises first indication information, and the first indication information indicates to re-establish a first radio link control RLC entity.

6. The method according to any one of claims 1 to 5, wherein the first message further comprises first configuration information, the first configuration information is used to configure a first RLC bearer and a first association relationship, and the first association relationship is an association relationship between the first RLC bearer and the second PDCP entity of the remote terminal device.

7. The method according to any one of claims 1 to 6, wherein the method further comprises:
sending (1307) second configuration information to a first relay terminal device, wherein the second configuration information indicates to re-establish an RLC entity; and/or
sending third configuration information to a first relay terminal device, wherein the third configuration information indicates to reconfigure an adaptation layer, wherein
the first relay terminal device is one of the at least one relay terminal device on the first path.

8. A data transmission method, applied to a remote terminal device, wherein the remote terminal device comprises a second packet data convergence protocol PDCP entity, and the method comprises:
receiving (1304b) a first message sent by a first network device, wherein the first message indicates the remote terminal device to switch from being connected to the first network device through a first path to being connected to a second network device through a second path, the second network device and the first network device are different network devices,
**characterized in that** the first message comprises first information, the first information indicates a receiving status of a first PDCP entity of the first network device, the receiving status of the first PDCP entity is an actual data packet receiving status of the first network device, the first path comprises at least one relay terminal device, and the second path comprises at least one relay terminal device or does not comprise a relay terminal device; and
performing, by the second PDCP entity, data transmission on the second path based on the first information.

9. The method according to claim 8, wherein
the first information indicates a sequence number or a count of a first data packet unsuccessfully received by the first PDCP entity;
the first information indicates a sequence number or a count of a data packet unsuccessfully received by the first PDCP entity;
the first information indicates a sequence number or a count of a data packet successfully received by the first PDCP entity;
the first information indicates a sequence number or a count of a last data packet successfully received by the first PDCP entity; or
the first information indicates a value obtained by adding 1 to a maximum sequence number or count of a data packet successfully received by the first PDCP entity.

10. The method according to claim 8 or 9, wherein the first message further comprises information about a data radio bearer corresponding to the first information, or the first message further comprises information indicating the first PDCP entity.

11. The method according to claim 10, wherein the performing, by the second PDCP entity, data transmission on the second path based on the first information comprises:
performing, by the second PDCP entity, data transmission on the second path based on the first information and the information about the data radio bearer corresponding to the first information.

12. The method according to any one of claims 8 to 11, wherein the performing, by the second PDCP entity, data transmission on the second path based on the first information comprises:
the second PDCP entity is a PDCP entity corresponding to an acknowledged mode data radio bearer AM DRB, and the second PDCP entity retransmits or transmits, based on the first information and starting from the first unsuccessfully received data packet, data packets in ascending order of counts of the data packets; or
the second PDCP entity is a PDCP entity corresponding to an unacknowledged mode data radio bearer UM DRB, and the second PDCP entity determines a data packet based on the first information, considers the data packet determined based on the first information as a data packet received from an upper layer, skips restarting a discard timer, and transmits a data packet that is obtained by re-associating the data packet, according to an ascending order of counts that have been associated before PDCP re-establishment, with a sequence number starting from a count of 0.

13. The method according to any one of claims 1 to 12, wherein the first message is an RRC reconfiguration message.

14. A communication apparatus, comprising a processor, wherein
the processor (2201) is connected to a memory (2202), the memory (2202) is configured to store computer-executable instructions, and the processor (2201) executes the computer-executable instructions stored in the memory (2202), so that the communication apparatus implements the method according to any one of claims 1 to 7, or implements the method according to any one of claims 8 to 13.

15. A computer-readable storage medium, comprising instructions, wherein when the instructions are run on a computer, the computer is enabled to perform the method according to any one of claims 1 to 7, or perform the method according to any one of claims 8 to 13.

## Patentansprüche

1. Datenübertragungsverfahren, das auf eine erste Netzwerkvorrichtung angewendet wird, wobei das Verfahren Folgendes umfasst:
Senden (1304b) einer ersten Nachricht an eine entfernte Endgerätevorrichtung, wobei die erste Nachricht die entfernte Endgerätevorrichtung anweist, von der Verbindung mit der ersten Netzwerkvorrichtung über einen ersten Pfad auf die Verbindung mit einer zweiten Netzwerkvorrichtung über einen zweiten Pfad umzuschalten,
wobei die zweite Netzwerkvorrichtung und die zweite Netzwerkvorrichtung unterschiedliche Netzwerkvorrichtungen sind,
**dadurch gekennzeichnet, dass** die erste Nachricht erste Informationen umfasst, die ersten Informationen einen Empfangsstatus einer ersten Einheit des Paketdatenkonvergenzprotokolls, PDCP-Einheit, der ersten Netzwerkvorrichtung angeben, der Empfangsstatus der ersten PDCP-Einheit ein tatsächlicher Empfangsstatus von Datenpaketen der ersten Netzwerkvorrichtung ist, der erste Pfad mindestens eine Relais-Endgerätevorrichtung umfasst und der zweite Pfad mindestens eine Relais-Endgerätevorrichtung umfasst oder keine Relais-Endgerätevorrichtung umfasst.

2. Verfahren nach Anspruch 1, wobei der Empfangsstatus der ersten PDCP-Einheit zur Datenübertragung einer zweiten PDCP-Einheit der entfernten Endgerätevorrichtung verwendet wird.

3. Verfahren nach Anspruch 1 oder 2, wobei
die ersten Informationen eine Sequenznummer oder eine Zahl von einem ersten Datenpaket angeben, das durch die erste PDCP-Einheit nicht erfolgreich empfangen wurde;
die ersten Informationen eine Sequenznummer oder eine Zahl von einem Datenpaket angeben, das durch die erste PDCP-Einheit nicht erfolgreich empfangen wurde;
die ersten Informationen eine Sequenznummer oder eine Zahl von einem Datenpaket angeben, das durch die erste PDCP-Einheit erfolgreich empfangen wurde;
die ersten Informationen eine Sequenznummer oder eine Zahl von einem letzten Datenpaket angeben, das durch die erste PDCP-Einheit erfolgreich empfangen wurde; oder
die ersten Informationen einen Wert, der durch Hinzufügen von 1 zu einer maximalen Sequenznummer erlangt wird, oder eine Zahl von einem ersten Datenpaket angeben, das durch die erste PDCP-Einheit erfolgreich empfangen wurde.

4. Verfahren nach einem der Ansprüche 1 bis 3, wobei die erste Nachricht ferner Informationen über einen Datenfunkträger entsprechend den ersten Informationen umfasst oder die erste Nachricht ferner Informationen umfasst, welche die erste PDCP-Einheit angeben.

5. Verfahren nach einem der Ansprüche 1 bis 4, wobei die erste Nachricht ferner erste Angabeinformationen umfasst, und die ersten Angabeinformationen angeben, dass eine erste Einheit der Funkverbindungssteuerung, RLC-Einheit, wiederherzustellen ist.

6. Verfahren nach einem der Ansprüche 1 bis 5, wobei die erste Nachricht ferner erste Konfigurationsinformationen umfasst, die ersten Konfigurationsinformationen verwendet werden, um einen ersten RLC-Träger und eine erste Zuordnungsbeziehung zu konfigurieren, und die erste Zuordnungsbeziehung eine Zuordnungsbeziehung zwischen dem ersten RLC-Träger und der zweiten PDCP-Einheit der entfernten Endgerätevorrichtung ist.

7. Verfahren nach einem der Ansprüche 1 bis 6, wobei das Verfahren ferner Folgendes umfasst:
Senden (1307) zweiter Konfigurationsinformationen an eine erste Relais-Endgerätevorrichtung, wobei die zweiten Konfigurationsinformationen angeben, dass eine RLC-Einheit wiederherzustellen ist; und/oder
Senden dritter Konfigurationsinformationen an eine erste Relais-Endgerätevorrichtung, wobei die dritten Konfigurationsinformationen angeben, dass eine Anpassungsschicht neu zu konfigurieren ist, wobei die erste Relais-Endgerätevorrichtung eine der mindestens einen Relais-Endgerätevorrichtung auf dem ersten Pfad ist.

8. Datenübertragungsverfahren, das auf eine entfernte Endgerätevorrichtung angewendet wird, wobei die entfernte Endgerätevorrichtung eine zweite Einheit des Paketdatenkonvergenzprotokolls, PDCP-Einheit, umfasst und das Verfahren Folgendes umfasst:
Empfangen (1304b) einer ersten Nachricht, die durch eine erste Netzwerkvorrichtung gesendet wird, wobei die erste Nachricht die entfernte Endgerätevorrichtung anweist, von der Verbindung mit der ersten Netzwerkvorrichtung über einen ersten Pfad auf die Verbindung mit einer zweiten Netzwerkvorrichtung über einen zweiten Pfad umzuschalten, die zweite Netzwerkvorrichtung und die erste Netzwerkvorrichtung unterschiedliche Netzwerkvorrichtungen sind,
**dadurch gekennzeichnet, dass** die erste Nachricht erste Informationen umfasst, die ersten Informationen einen Empfangsstatus einer ersten PDCP-Einheit der ersten Netzwerkvorrichtung angeben, der Empfangsstatus der ersten PDCP-Einheit ein tatsächlicher Empfangsstatus von Datenpaketen der ersten Netzwerkvorrichtung ist, der erste Pfad mindestens eine Relais-Endgerätevorrichtung umfasst und der zweite Pfad mindestens eine Relais-Endgerätevorrichtung umfasst oder keine Relais-Endgerätevorrichtung umfasst; und
Durchführen einer Datenübertragung auf dem zweiten Pfad durch die zweite PDCP-Einheit basierend auf den ersten Informationen.

9. Verfahren nach Anspruch 8, wobei
die ersten Informationen eine Sequenznummer oder eine Zahl von einem ersten Datenpaket angeben, das durch die erste PDCP-Einheit nicht erfolgreich empfangen wurde;
die ersten Informationen eine Sequenznummer oder eine Zahl von einem Datenpaket angeben, das durch die erste PDCP-Einheit nicht erfolgreich empfangen wurde;
die ersten Informationen eine Sequenznummer oder eine Zahl von einem ersten Datenpaket angeben, das durch die erste PDCP-Einheit erfolgreich empfangen wurde;
die ersten Informationen eine Sequenznummer oder eine Zahl von einem letzten Datenpaket angeben, das durch die erste PDCP-Einheit erfolgreich empfangen wurde; oder
die ersten Informationen einen Wert, der durch Hinzufügen von 1 zu einer maximalen Sequenznummer erlangt wird, oder eine Zahl von einem ersten Datenpaket angeben, das durch die erste PDCP-Einheit erfolgreich empfangen wurde.

10. Verfahren nach Anspruch 8 oder 9, wobei die erste Nachricht ferner Informationen über einen Datenfunkträger entsprechend den ersten Informationen umfasst, oder die erste Nachricht ferner Informationen umfasst, welche die erste PDCP-Einheit angeben.

11. Verfahren nach Anspruch 10, wobei das Durchführen einer Datenübertragung auf dem zweiten Pfad durch die zweite PDCP-Einheit basierend auf den ersten Informationen Folgendes umfasst:
Durchführen einer Datenübertragung auf dem zweiten Pfad durch die zweite PDCP-Einheit basierend auf den ersten Informationen und den Informationen über den Datenfunkträger entsprechend den ersten Informationen.

12. Verfahren nach einem der Ansprüche 8 bis 11, wobei das Durchführen einer Datenübertragung auf dem zweiten Pfad durch die zweite PDCP-Einheit basierend auf den ersten Informationen Folgendes umfasst:
die zweite PDCP-Einheit ist eine PDCP-Einheit entsprechend einem Datenfunkträger im bestätigten Modus, AM DRB, und die zweite PDCP-Einheit überträgt erneut oder überträgt Datenpakete in aufsteigender Reihenfolge der Zahl der Datenpakete basierend auf den ersten Informationen und beginnend mit dem ersten nicht erfolgreich empfangenen Datenpaket; oder
die zweite PDCP-Einheit ist eine PDCP-Einheit entsprechend einem Datenfunkträger im unbestätigten Modus, UM DRB, und die zweite PDCP-Einheit bestimmt ein Datenpaket basierend auf den ersten Informationen, erachtet das Datenpaket, das basierend auf den ersten Informationen bestimmt wird, als ein von einer höheren Schicht empfangenes Datenpaket, überspringt das Neustarten eines Verwerfungszeitgebers und überträgt ein Datenpaket, das durch erneutes Zuordnen des Datenpakets gemäß einer aufsteigenden Reihenfolge der Zahlen erlangt wird, die vor der PDCP-Neueinrichtung zugeordnet werden, zu einer Sequenznummer, beginnend ab einer Zahl von 0.

13. Verfahren nach einem der Ansprüche 1 bis 12, wobei die erste Nachricht eine RRC-Neukonfigurationsnachricht ist.

14. Kommunikationsvorrichtung, umfassend einen Prozessor, wobei
der Prozessor (2201) mit einem Speicher (2202) verbunden ist, der Speicher (2202) dazu konfiguriert ist, computerausführbare Anweisungen zu speichern, und der Prozessor (2201) die in dem Speicher (2202) gespeicherten computerausführbaren Anweisungen ausführt, sodass die Kommunikationseinrichtung das Verfahren nach einem der Ansprüche 1 bis 7 implementiert oder das Verfahren nach einem der Ansprüche 8 bis 13 implementiert.

15. Computerlesbares Speichermedium, umfassend Anweisungen, wobei, wenn die Anweisungen auf einem Computer ausgeführt werden, der Computer in die Lage versetzt wird, das Verfahren nach einem der Ansprüche 1 bis 7 durchzuführen oder das Verfahren nach einem der Ansprüche 8 bis 13 durchzuführen.

## Revendications

1. Procédé de transmission de données, appliqué à un premier dispositif réseau, dans lequel le procédé comprend :
l'envoi (1304b) d'un premier message à un dispositif terminal distant, dans lequel le premier message indique au dispositif terminal distant de commuter d'une connexion au premier dispositif réseau par le biais d'un premier chemin à une connexion à un second dispositif réseau par le biais d'un second chemin,
dans lequel le second dispositif réseau et le premier dispositif réseau sont des dispositifs réseau différents,
**caractérisé en ce que** le premier message comprend de premières informations, les premières informations indiquent un état de réception d'une première entité de protocole de convergence de données par paquets, PDCP, du premier dispositif réseau, l'état de réception de la première entité PDCP est un état de réception de paquets de données réel du premier dispositif réseau, le premier chemin comprend au moins un dispositif terminal relais, et le second chemin comprend au moins un dispositif terminal relais ou ne comprend pas de dispositif terminal relais.

2. Procédé selon la revendication 1, dans lequel l'état de réception de la première entité PDCP est utilisé pour la transmission de données d'une seconde entité PDCP du dispositif terminal distant.

3. Procédé selon la revendication 1 ou 2, dans lequel les premières informations indiquent un numéro de séquence ou un compte d'un premier paquet de données reçu sans succès par la première entité PDCP ;
les premières informations indiquent un numéro de séquence ou un compte d'un paquet de données reçu sans succès par la première entité PDCP ;
les premières informations indiquent un numéro de séquence ou un compte d'un paquet de données reçu avec succès par la première entité PDCP ;
les premières informations indiquent un numéro de séquence ou un compte d'un dernier paquet de données reçu avec succès par la première entité PDCP ; ou
les premières informations indiquent une valeur obtenue en ajoutant 1 à un numéro de séquence maximal ou à un compte d'un paquet de données reçu avec succès par la première entité PDCP.

4. Procédé selon l'une quelconque des revendications 1 à 3, dans lequel le premier message comprend également des informations sur un support radio de données correspondant aux premières informations, ou le premier message comprend également des informations indiquant la première entité PDCP.

5. Procédé selon l'une quelconque des revendications 1 à 4, dans lequel le premier message comprend également de premières informations d'indication, et les premières informations d'indication indiquent de rétablir une première entité de commande de liaison radio, RLC.

6. Procédé selon l'une quelconque des revendications 1 à 5, dans lequel le premier message comprend également de premières informations de configuration, les premières informations de configuration sont utilisées pour configurer un premier support RLC et une première relation d'association, et la première relation d'association est une relation d'association entre le premier support RLC et la seconde entité PDCP du dispositif terminal distant.

7. Procédé selon l'une quelconque des revendications 1 à 6, dans lequel le procédé comprend également :
l'envoi (1307) de deuxièmes informations de configuration à un premier dispositif terminal relais, dans lequel les deuxièmes informations de configuration indiquent de rétablir une entité RLC ; et/ou
l'envoi de troisièmes informations de configuration à un premier dispositif terminal relais, dans lequel les troisièmes informations de configuration indiquent de reconfigurer une couche d'adaptation, dans lequel
le premier dispositif terminal relais est l'un de l'au moins un dispositif terminal relais sur le premier chemin.

8. Procédé de transmission de données, appliqué à un dispositif terminal distant, dans lequel le dispositif terminal distant comprend une seconde entité de protocole de convergence de données par paquets (PDCP) et le procédé comprend :
la réception (1304b) d'un premier message envoyé par un premier dispositif réseau, dans lequel le premier message indique au dispositif terminal distant de commuter d'une connexion au premier dispositif réseau par le biais d'un premier chemin à une connexion à un second dispositif réseau par le biais d'un second chemin, le second dispositif réseau et le premier dispositif réseau sont des dispositifs réseau différents,
**caractérisé en ce que** le premier message comprend des premières informations, les premières informations indiquent un état de réception d'une première entité PDCP du premier dispositif réseau, l'état de réception de la première entité PDCP est un état de réception de paquets de données réel du premier dispositif réseau, le premier chemin comprend au moins un dispositif terminal relais, et le second chemin comprend au moins un dispositif terminal relais ou ne comprend pas de dispositif terminal relais ; et
la réalisation, par la seconde entité PDCP, d'une transmission de données sur le second chemin sur la base des premières informations.

9. Procédé selon la revendication 8, dans lequel les premières informations indiquent un numéro de séquence ou un compte d'un premier paquet de données reçu sans succès par la première entité PDCP ;
les premières informations indiquent un numéro de séquence ou un compte d'un paquet de données reçu sans succès par la première entité PDCP ;
les premières informations indiquent un numéro de séquence ou un compte d'un paquet de données reçu avec succès par la première entité PDCP ;
les premières informations indiquent un numéro de séquence ou un compte d'un dernier paquet de données reçu avec succès par la première entité PDCP ; ou
les premières informations indiquent une valeur obtenue en ajoutant 1 à un numéro de séquence maximal ou à un compte d'un paquet de données reçu avec succès par la première entité PDCP.

10. Procédé selon la revendication 8 ou 9, dans lequel le premier message comprend également des informations sur un support radio de données correspondant aux premières informations, ou le premier message comprend également des informations indiquant la première entité PDCP.

11. Procédé selon la revendication 10, dans lequel la réalisation, par la seconde entité PDCP, d'une transmission de données sur le second chemin sur la base des premières informations comprend :
la réalisation, par la seconde entité PDCP, d'une transmission de données sur le second chemin sur la base des premières informations et des informations sur le support radio de données correspondant aux premières informations.

12. Procédé selon l'une quelconque des revendications 8 à 11, dans lequel la réalisation, par la seconde entité PDCP, d'une transmission de données sur le second chemin sur la base des premières informations comprend :
la seconde entité PDCP est une entité PDCP correspondant à un support radio de données en mode reconnu AM DRB, et la seconde entité PDCP retransmet ou transmet, sur la base des premières informations et à partir du premier paquet de données reçu sans succès, des paquets de données dans l'ordre croissant de comptes de paquets de données ; ou
la seconde entité PDCP est une entité PDCP correspondant à un support radio de données en mode non reconnu UM DRB, et la seconde entité PDCP détermine un paquet de données sur la base des premières informations, considère le paquet de données déterminé sur la base des premières informations comme un paquet de données reçu d'une couche supérieure, saute le redémarrage d'un temporisateur de rejet, et transmet un paquet de données qui est obtenu en réassociant le paquet de données, selon un ordre croissant de comptes qui ont été associés avant le rétablissement PDCP, avec un numéro de séquence commençant à partir d'un compte de 0.

13. Procédé selon l'une quelconque des revendications 1 à 12, dans lequel le premier message est un message de reconfiguration RRC.

14. Appareil de communication, comprenant un processeur, dans lequel
le processeur (2201) est connecté à une mémoire (2202), la mémoire (2202) est configurée pour stocker des instructions exécutables par ordinateur, et le processeur (2201) exécute les instructions exécutables par ordinateur stockées dans la mémoire (2202), de sorte que l'appareil de communication met en œuvre le procédé selon l'une quelconque des revendications 1 à 7, ou met en œuvre le procédé selon l'une quelconque des revendications 8 à 13.

15. Support de stockage lisible par ordinateur, comprenant des instructions, dans lequel lorsque les instructions sont exécutées sur un ordinateur, l'ordinateur est activé pour réaliser le procédé selon l'une quelconque des revendications 1 à 7, ou réaliser le procédé selon l'une quelconque des revendications 8 à 13.
